# FASCICULE DE BREVET EUROPEEN

(11) **EP 3 922 107 B1**
(45) Date de publication et mention de la délivrance du brevet: **02.07.2025**
(21) Numéro de dépôt: 21174788.6
(22) Date de dépôt: 19.05.2021
(51) Int. Cl.: A23L 21/25, B01D 11/02, A23L 33/105, A23L 2/02

(54) **SOLVANT EUTECTIQUE D'ORIGINE NATURELLE, SON UTILISATION ET PROCÉDÉ D'EXTRACTION LE METTANT EN OEUVRE**
EUTEKTISCHES LÖSUNGSMITTEL NATÜRLICHEN URSPRUNGS, SEINE VERWENDUNG UND EXTRAKTIONSVERFAHREN, BEI DEM ES EINGESETZT WIRD
EUTECTIC SOLVENT OF NATURAL ORIGIN, USE THEREOF AND EXTRACTION METHOD IMPLEMENTING SAME

(30) Priorité: 19.05.2020 FR 2005121
(43) Date de publication de la demande: 15.12.2021
(73) Titulaire: Laboratoires Arkopharma, 06510 Carros (FR); Avignon Université, 84029 Avignon Cedex 01 (FR)
(72) Inventeur: CHEMAT, Farid, 84310 Morières les Avignon (FR); FABIANO-TIXIER, Anne-Sylvie, 30650 Rochefort du Gard (FR); IMBERT, Rémi, 06610 La Gaude (FR); KHADHRAOUI, Boutheina, 84140 Montfavet (FR); ROBINET, Philippe, 06580 Pégomas (FR)
(74) Mandataire: Murgitroyd & Company

(56) Documents cités:
- EP-A1- 2 575 993
- WO-A1-2015/165738
- CECILIA GUÍZAR GONZÁLEZ ET AL: "Application of natural deep eutectic solvents for the "green"extraction of vanillin from vanilla pods", FLAVOUR AND FRAGRANCE JOURNAL., vol. 33, no. 1, 1 January 2018 (2018-01-01), GB, pages 91 - 96, XP055768647, ISSN: 0882-5734, DOI: 10.1002/ffj.3425
- ESPINO MAGDALENA ET AL: "Natural designer solvents for greening analytical chemistry", TRAC TRENDS IN ANALYTICAL CHEMISTRY, vol. 76, 1 February 2016 (2016-02-01), pages 126 - 136, XP029394067, ISSN: 0165-9936, DOI: 10.1016/J.TRAC.2015.11.006
- BOSILJKOV TOMISLAV ET AL: "Natural deep eutectic solvents and ultrasound-assisted extraction: Green approaches for extraction of wine lees anthocyanins", FOOD AND BIOPRODUCTS PROCESSING, INSTITUTION OF CHEMICAL ENGINEERS, RUGBY, GB, vol. 102, 29 December 2016 (2016-12-29), pages 195 - 203, XP029938846, ISSN: 0960-3085, DOI: 10.1016/J.FBP.2016.12.005

## Description

### Domaine technique

La présente invention concerne le domaine des solvants eutectiques naturels, permettant la solubilisation et l'extraction de composés d'origine naturelle (par exemple d'origine végétale) ou l'obtention d'extraits (par exemple d'extraits végétaux) à partir de matière(s) première(s) d'origine naturelle (par exemple à partir de matière(s) première(s) d'origine végétale, fongique, animale et/ou microbienne).

### Etat de la technique

Dans le domaine de l'extraction à l'échelle industrielle (mise en œuvre, par exemple, dans les industries chimique, alimentaire, pharmaceutique), et en particulier de l'extraction végétale, des solvants organiques issus de la pétrochimie (dits « solvants d'origine pétrochimique » ou « Composés Organiques Volatiles (COV) ») sont largement utilisés pour l'extraction de composés, principes actifs ou substances à partir de matière(s) première(s) d'origine végétale. Selon la nature des composés, principes actifs ou substances ciblés, des solvants organiques, tels que les alcools, l'hexane et l'acétate d'éthyle, sont généralement utilisés dans les procédés d'extraction. Toutefois, ces solvants peuvent s'avérer toxiques, inflammables, explosifs et/ou peu biodégradables.

En particulier en raison des problématiques susvisées, des réglementations nationales et supranationales contraignantes (telles que la directive 1999/13/CE, relative aux émissions de COV, la directive 67/548/CEE, relative aux substances dangereuses, la directive 1999/45/CE, relative aux produits dangereux et, depuis le 1^{er} juin 2007, le règlement européen REACH (« Registration, Evaluation, Autorisation and Restriction of Chemicals », en langue anglaise)) sont venues encadrer, de manière stricte, l'utilisation des solvants d'origine pétrochimique, conduisant au besoin de substituer lesdits solvants d'origine pétrochimique par des solvants d'extraction alternatifs renouvelables et faiblement toxiques (voire dépourvus de toxicité), communément dénommés « solvants verts ». De surcroît, dans certains domaines, comme par exemple en ce qui concerne les mélanges liquides conditionnés en ampoules ou unidoses, la réglementation nationale s'avère encore plus contraignante concernant le solvant utilisé qui fait partie du produit final consommé.

Confronté à ces problématiques, l'homme du métier s'est naturellement tourné vers l'utilisation de l'eau comme solvant pour réaliser l'extraction de composés d'origine naturelle (et en particulier de composés bioactifs). En effet, l'eau demeure le solvant le plus sûr (à savoir le moins toxique) et le moins onéreux. Néanmoins, son caractère très polaire limite son pouvoir de solubilisation aux composés naturels polaires (hydrophiles), excluant de facto les composés naturels peu polaires (également dénommés « composés à polarité intermédiaire ») et apolaires. De surcroît, si l'on s'intéresse à l'extraction de composés bioactifs à partir de matière(s) première(s) végétale(s) (matériel végétal), l'homme du métier sait que l'efficacité du recours à l'eau comme solvant d'extraction sera inéluctablement affectée par la mauvaise diffusion de l'eau dans le tissu végétal. Par exemple, dans le cas de plantes contenant des lipides ou des molécules apolaires ou à polarité intermédiaire, l'eau ne peut que difficilement - voire très difficilement - mouiller la surface de la plante et pénétrer au sein du tissu végétal, en raison de la non-miscibilité et la non solvatation des molécules apolaires présentes en grande quantité dans la plante.

Dans cette recherche d'alternatives aux solvants d'extraction d'origine pétrochimique, d'autres solvants d'extraction - et catégories de solvants d'extraction - ont été explorés. A cet égard, il est possible de citer, par exemple, la demande PCT publiée sous la référence WO 2018/122514 A1, laquelle divulgue l'utilisation de l'eau de coco (dont le degré Brix est compris entre 4 et 6, à 20°C) comme solvant d'extraction et les extraits obtenus par extraction avec cette eau de coco. Il est également possible de faire état d'une célèbre famille de solvants, à savoir les liquides ioniques (Lls), consistant en des sels liquides se différenciant de l'ensemble des sels fondus par une température de fusion inférieure à 100°C **[1].** Un grand nombre d'entre eux sont liquides à température ambiante. Ces liquides ioniques sont constitués d'un cation, le plus souvent organique, associé à un anion organique ou inorganique. Ils ont été découverts pour la première fois par Paul Walden en 1914 dans le cas du nitrate d'éthylammonium, obtenu par neutralisation de l'éthylamine avec de l'acide nitrique concentré. Bien que les LIs présentent des propriétés intéressantes (ininflammabilité, stabilité thermique, faible pression de vapeur, etc.), ils ne peuvent toutefois pas être considérés comme de véritables solvants d'extraction « verts » notamment en raison de leur faible biocompatibilité et biodégradabilité, ainsi que de leur toxicité **[2] [10].**

Depuis le début des années 2000, des solvants eutectiques profonds (SEPs ; « Deep Eutectic Solvents » en langue anglaise, dont l'acronyme est DESs) ont été développés. Généralement définis comme une sous-catégorie des LIs (**[3]** et **[4]**), ces SEPs consistent en des mélanges d'au moins deux espèces qui s'associent entre elles par des liaisons intermoléculaires non-covalentes (en particulier par des liaisons hydrogènes). Ces interactions entraînent une diminution énergétique caractérisée par la température de fusion du mélange. On utilise la dénomination « mélange eutectique » lorsque le point de fusion du mélange (ou point eutectique), à un ratio molaire bien déterminé, est inférieur à celui des deux composés du mélange pris individuellement **[5].**

Les propriétés des SEPs sont similaires ou voisines à/de celles des LIs ; les avantages principaux inhérents aux SEPs étant leur facilité de préparation et le faible coût de leurs constituants. Parmi ces SEPs, on peut citer le chlorure de choline, qui joue le rôle d'accepteur de liaison hydrogène (ALH), et permet de former un mélange eutectique avec la plupart des donneurs de liaison hydrogène (DLH). Ainsi, il est possible de citer un SEP formé par le mélange du chlorure de choline et de l'urée (dans un ratio molaire 1/2), lequel fut historiquement un des premiers SEPs mis en évidence.

Toutefois, et bien que les SEPs aient déjà été testés en vue d'extraire des molécules d'intérêt à partir de matière(s) première(s) végétale(s) (par exemple extraction de quercétine et de kaempférol, cf. **[6]**), il convient de noter que la viscosité de ces SEPs (et en particulier de ceux comprenant du chlorure de choline comme ALH) demeure problématique pour l'extraction naturelle, et en particulier l'extraction végétale, au point que certains systèmes requièrent l'ajout d'additif(s) tel(s) que de l'eau pour être utilisés. A cela s'ajoute l'absence de preuve établie concernant la non-toxicité des SEPs en comparaison aux solvants LIs « traditionnels » dont le profil toxicologique a largement été interrogé par le passé. En outre, les SEPs comprennent des composés ALHs (tels que le chlorure de choline) et des composés DLHs obtenus par chimie de synthèse, ce qui ne permet pas de garantir l'innocuité (ou à tout le moins la compatibilité avec les réglementations idoines en matière de produits biologiques, cf. notamment règlement CE n° 889/2008 du 5 septembre 2008 - portant sur les modalités d'application du règlement (CE) n° 834/2007 du Conseil relatif à la production biologique et à l'étiquetage des produits biologiques en ce qui concerne la production biologique, l'étiquetage et les contrôles - et ses modifications/rectifications, ainsi que le nouveau règlement (UE) 2018/848, lequel entrera en vigueur à compter du 1^{er} janvier 2021), des composés et/ou des extraits obtenus à partir de matière(s) première(s) naturelle(s) (par exemple de matière(s) première(s) végétale(s)) par extraction au moyen de ces SEPs.

C'est pourquoi, ces dernières années, une attention particulière a été accordée aux SEPs constitués uniquement de molécules naturelles. L'acronyme « NADES » (pour « Natural Deep Eutectic Solvents », dont la traduction en langue française est « solvant eutectique profond d'origine naturelle » (SEPNa)) a été proposé par l'équipe du Professeur Verpoorte de l'Université de Leiden (cf. demande PCT publiée sous la référence WO 2011/155829 A1).

WO 2011/155829 A1 divulgue notamment un procédé d'extraction réalisé à partir d'une matière biologique (par exemple d'origine végétale), mis en œuvre au moyen d'un agent d'extraction consistant en un solvant eutectique profond d'origine naturelle ou un liquide ionique d'origine naturelle. Selon un mode de réalisation, ledit solvant eutectique profond est défini comme comprenant la combinaison d'au moins deux composés, sensiblement sans liaison chimique ou ionique, à savoir :
- un acide organique naturel ou un composé inorganique, et
- un sucre mono- ou dimérique naturel, un polyol, un acide aminé, un di ou trialcanol, ou la choline ou ses dérivés, tels que la phosphatidylcholine.

Différents NADES et/ou procédés d'extraction incluant ces NADES ont été développés par la suite. A titre d'exemple, l'on peut citer l'enseignement de la demande PCT publiée sous la référence WO 2016/162703 A1. Cette dernière concerne un solvant d'extraction eutectique pour extraire, par exemple, un matériel biologique végétal, animal et/ou procaryote, ledit solvant d'extraction eutectique étant un mélange, décrit comme transparent, stable et fluide, comprenant :
(a) de la bétaïne ou une forme hydratée de la bétaïne;
(b) au moins un composé donneur de liaison hydrogène choisi dans le groupe constitué de polyols et d'acides organiques; et
(c) de l'eau à condition que le solvant d'extraction eutectique ne contienne pas de sucre exogène et/ou de sel d'amine et/ou d'anion.

Egalement à titre d'exemple, l'on peut citer:
- des NADES comprenant de l'acide citrique et un sucre, ou de l'acide malique et un sucre (cf. ESPINO, M. et al. « Natural designer solvents for greening analytical chemistry », Trac trends in analytical chemistry, (2016), volume 76, pages 126-136),
- des NADES comprenant du glucose et/ou du fructose, de l'acide citrique ou de l'acide malique et de l'eau (cf. GONZALEZ, C.G. et al. « Application of natural deep eutectic solvents for the « green » extraction of vanillin form vanilla pods », Flavour and fragance journal, (2018), volume 33, pages 91-93).

Toujours à titre d'exemple, la demande de brevet PCT publiée sous la référence WO 2015/165738 A1 décrit différentes compositions de NADES destinés à être utilisés dans le domaine alimentaire. Les exemples 1a et 1b de ce document enseignent, à titre illustratif, des compositions comprenant notamment de l'eau, de l'érythritol, de l'acide lactique, de la glycérine et une émulsion dénommée « lemon lime flavor emulsion 1 » ou « lemon lime flavor emulsion 2 », présentée comme contenant de l'acide ascorbique.

Néanmoins, il existe un besoin important de concevoir et mettre au point de nouveaux NADES possédant une très bonne efficacité d'extraction, satisfaisant aux critères de naturalité, biocompatibilité et biodégradabilité (afin de garantir la sécurité sanitaire du consommateur et de diminuer au maximum l'impact environnemental) et, si possible, étant conformes aux réglementations idoines en matière de produits biologiques.

### Exposé de l'invention

La présente invention vise à répondre à ce besoin. Celle-ci concerne un solvant eutectique d'origine naturelle, tel qu'un solvant eutectique profond d'origine naturelle, ledit solvant comprenant (ou consistant essentiellement en ou consistant en) :
a) une pluralité de glucides d'origine naturelle différents (jouant le rôle de composés accepteurs de liaison hydrogène), de préférence sélectionnés parmi les mono- et diholosides, préférablement parmi les monoholosides, avantageusement ladite pluralité a) comprenant du glucose et du fructose, et
b) une pluralité d'acides organiques d'origine naturelle différents (jouant le rôle de composés donneurs de liaison hydrogène), préférablement sélectionnés parmi les acides mono- et pluri-carboxyliques, avantageusement parmi les acides dicarboxyliques, de préférence alpha-hydroxylés tels que l'acide malique, et/ou les acides tricarboxyliques, de préférence alpha-hydroxylés tels que l'acide citrique, de manière préférée ladite pluralité b) comprenant l'acide malique et l'acide citrique ;
ledit solvant ayant un degré Brix d'au moins 8, de préférence d'au moins 9 et avantageusement d'au moins 10, à 20°C.

En effet, les inventeurs ont découvert que la combinaison d'une pluralité de composés accepteurs de liaison hydrogène différents (glucides d'origine naturelle différents), en quantité suffisante (Brix du solvant : au moins 8°), et d'une pluralité d'acides organiques d'origine naturelle différents (jouant le rôle de composés donneurs de liaison hydrogène) permettait de préparer un solvant eutectique d'origine naturelle (tel qu'un solvant eutectique profond d'origine naturelle) répondant au besoin susvisé.

Selon un mode de réalisation, ledit solvant eutectique d'origine naturelle a un degré Brix d'au moins 13, de préférence d'au moins 14 et avantageusement d'au moins 15.

Selon un autre mode de réalisation, ledit solvant eutectique d'origine naturelle a un degré Brix d'au moins 60, de préférence compris entre environ 60 et environ 90 (par exemple entre 60 et 90), avantageusement compris entre environ 70 et environ 85 (par exemple entre 70 et 85).

Selon un aspect de l'invention, ladite pluralité d'acides organiques d'origine naturelle différents représente au moins 0,1%, de préférence au moins 0,15%, de la masse totale dudit solvant.

Selon un mode de réalisation de cet aspect de l'invention, ladite pluralité d'acides organiques d'origine naturelle différents représente au moins 1%, de préférence au moins 1,5%, avantageusement au moins 1,75%, de la masse totale dudit solvant.

Selon un mode de réalisation préférée, ledit solvant comprend, consiste essentiellement en, ou consiste en :
i) au moins un ingrédient d'origine naturelle, ledit au moins un ingrédient d'origine naturelle comprenant ladite pluralité de glucides d'origine naturelle différents et ladite pluralité d'acides organiques d'origine naturelle différents, ou
ii) un mélange d'au moins un premier et d'au moins un deuxième ingrédients d'origine naturelle (lesdits premier et deuxième ingrédients d'origine naturelle étant différents), ledit au moins un premier ingrédient d'origine naturelle comprenant ladite pluralité de glucides d'origine naturelle différents, et ledit au moins un deuxième ingrédient d'origine naturelle comprenant ladite pluralité d'acides organiques d'origine naturelle différents ;
la variante ii) supra étant préférée.

En effet, les inventeurs ont découvert que le fait d'utiliser au moins un ingrédient d'origine naturelle tel que défini au point i) supra ou - de manière préférée - un mélange d'au moins un premier et d'au moins un deuxième ingrédients d'origine naturelle tel que défini au point ii) supra s'avérait particulièrement avantageux en matière d'augmentation du pouvoir de solubilisation et/ou d'extraction observé lors de la mise en œuvre du solvant selon l'invention. Sans être liés par la théorie, cela peut vraisemblablement s'expliquer par le fait que ledit au moins un ingrédient d'origine naturelle ou - selon un mode de réalisation préféré - lesdits premier et deuxième ingrédients d'origine naturelle représentent des environnements chimiques complexes, comprenant notamment d'autres métabolites primaires tels que les amines, les vitamines mais également, et de manière fort intéressante, une pluralité de glucides autres que le glucose (fructose, saccharose, etc.) et une pluralité d'acides organiques naturels différents (acide malique, acide citrique, etc.). Cet environnement chimique complexe expliquerait, selon toute vraisemblance, l'augmentation significative du pouvoir de solubilisation et/ou d'extraction d'un solvant eutectique d'origine naturelle les comprenant. Si ces deux modes de réalisation i) et ii) se sont avérés très satisfaisants, les inventeurs ont découvert que le mode de réalisation ii) était optimal.

Avantageusement, et concernant le mode de réalisation préféré ii) supra :
- ledit au moins un premier ingrédient d'origine naturelle est un composé sucré d'origine naturelle, de préférence ayant un degré Brix (à 20°C) compris entre environ 40 et environ 95 (par exemple entre 40 et 95), de préférence entre environ 60 et environ 90 (par exemple entre 60 et 90), avantageusement entre environ 75 et environ 85 (par exemple entre 75 et 85), de manière préférée ledit au moins un premier ingrédient d'origine naturelle étant un miel, par exemple un miel de fleurs, un miel d'oranger ou un miel liquide, ou un mélange de miels, et
- ledit au moins un deuxième ingrédient d'origine naturelle comprend au moins 0,2% en masse, de préférence au moins 0,3% en masse, avantageusement au moins 0,35% en masse, d'acides organiques d'origine naturelle, de manière préférée ledit au moins un deuxième ingrédient d'origine naturelle étant un jus de fruits, par exemple un jus de fruits concentré, ou un mélange de jus de fruits, par exemple un mélange de jus de fruits concentrés.

Selon un mode de réalisation de l'invention, et en particulier lorsque le susdit au moins un deuxième ingrédient d'origine naturelle est un jus de fruits concentré, ledit au moins un deuxième ingrédient d'origine naturelle comprend au moins 1% en masse, de préférence au moins 1,5% en masse et avantageusement au moins 1,75% en masse, d'acides organiques d'origine naturelle.

Selon un mode de réalisation, le rapport en masse entre ledit au moins un premier ingrédient d'origine naturelle et ledit au moins un deuxième ingrédient d'origine naturelle est compris entre 5/1 et 1/5, de préférence entre 3/1 et 1/3, préférablement entre 2/1 et 1/2, avantageusement entre 3/2 et 2/3 ; de manière particulièrement préférée ledit rapport en masse étant d'environ 1/1.

Selon un mode de réalisation, le solvant eutectique d'origine naturelle selon l'invention comprend de l'eau exogène (à savoir reçoit un apport d'eau exogène), par exemple de l'eau distillée, dans un pourcentage massique inférieur ou égal à 90%, par exemple inférieur ou égal à 80%, par rapport à la masse totale du solvant.

En fonction de la nature du matériel biologique (matériel végétal, fongique, animal et/ou microbien), l'homme du métier saura s'il est opportun de réaliser un apport d'eau exogène, dans les conditions mentionnées précédemment, au solvant eutectique d'origine naturelle selon l'invention.

Un autre objet de l'invention concerne l'utilisation d'un solvant eutectique d'origine naturelle selon l'invention pour solubiliser et/ou extraire, de préférence pour solubiliser et extraire, par exemple par extraction solide-liquide telle que l'extraction par macération, un ou plusieurs composé(s) d'un matériel végétal, fongique, animal et/ou microbien, de préférence d'un matériel végétal ou fongique, avantageusement d'un matériel végétal.

Selon un mode de réalisation préférée, le solvant eutectique d'origine naturelle selon l'invention est utilisé pour solubiliser et extraire un ou plusieurs composé(s) d'un matériel végétal, fongique, animal et/ou microbien, de préférence d'un matériel végétal ou fongique, avantageusement d'un matériel végétal ; ladite extraction étant une extraction assistée par ultrasons (permettant d'optimiser les résultats obtenus en matière d'extraction).

L'invention a également pour objet un procédé d'extraction d'un ou plusieurs composé(s) d'un matériel végétal, fongique, animal et/ou microbien, de préférence d'un matériel végétal ou fongique, avantageusement d'un matériel végétal, ledit procédé comprenant les étapes suivantes :
a) fourniture d'un matériel végétal, fongique, animal et/ou microbien,
b) mise en contact dudit matériel végétal, fongique, animal et/ou microbien avec au moins un solvant eutectique d'origine naturelle selon l'invention durant un laps de temps suffisant pour permettre la solubilisation dudit ou desdits composé(s) et obtenir un extrait liquide,
c) séparation, par exemple par pressage, de l'extrait liquide obtenu à l'étape b) et du matériel végétal, fongique, animal et/ou microbien résiduel, et
d) récupération, postérieurement à l'étape c), de l'extrait liquide, éventuellement après une étape c') de purification, par exemple par centrifugation.

De préférence, l'étape b) est réalisée sous ultrasons (afin d'optimiser le procédé d'extraction selon l'invention).

Selon un mode de réalisation, le procédé d'extraction selon l'invention comprend, avant l'étape b), au moins une étape de réduction de taille dudit matériel végétal, fongique, animal et/ou microbien.

De préférence, l'étape b) du procédé d'extraction selon l'invention est réalisée à une température comprise entre environ 20°C et environ 80°C (par exemple entre 20°C et 80°C), de préférence entre environ 30°C et environ 75°C (par exemple entre 30°C et 75°C), préférablement entre environ 40°C et environ 70°C (par exemple entre 40°C et 70°C), avantageusement entre environ 55°C et environ 65°C (par exemple entre 55°C et 65°C), et de manière préférée à une température d'environ 60°C (par exemple 60°C).

Selon un mode de réalisation, le matériel végétal, fongique, animal et/ou microbien est présent, à l'étape b) du procédé selon l'invention, dans un pourcentage massique compris entre environ 1% et environ 20% (par exemple entre 1% et 20%), de préférence entre environ 5% et environ 15% (par exemple entre 5% et 15%), préférablement entre environ 8% et environ 12% (par exemple entre 8% et 12%), avantageusement d'environ 10% (par exemple de 10%), par rapport à la masse totale représentée par le matériel végétal, fongique, animal et/ou microbien et ledit solvant.

L'invention concerne également l'extrait liquide directement obtenu par le procédé d'extraction selon l'invention.

L'invention concerne également une composition pharmaceutique, un médicament (à usage humain ou animal, de préférence à usage humain), un complément alimentaire (à usage humain ou animal, de préférence à usage humain), un dispositif médical ou un ADDFMS (cf. définition infra), comprenant, consistant essentiellement en, ou consistant en, l'extrait liquide selon l'invention.

Est également décrit un contenant à usage unique clos, de préférence de manière hermétique, tel qu'un flacon, un sachet unidose, un stick unidose, une flaconnette, une ampoule bouteille unidose ou une ampoule à extrémité(s) cassable(s), ledit contenant comprenant l'extrait liquide selon l'invention. Selon un mode de réalisation, ledit contenant est une ampoule à extrémités cassables en plastique ou en verre, de préférence en verre, par exemple d'une contenance de 10 ou 15 mL.

L'invention a également pour objet l'utilisation d'au moins un ingrédient d'origine naturelle i) (tel que défini précédemment) ou, de manière préférée, d'un mélange d'au moins un premier et d'au moins un deuxième ingrédients d'origine naturelle ii) (tel que défini précédemment), pour la préparation d'un solvant eutectique d'origine naturelle, tel qu'un solvant eutectique profond d'origine naturelle.

En effet, et tel qu'expliqué précédemment, le fait d'utiliser au moins un ingrédient d'origine naturelle ou, de manière préférée, un mélange d'au moins deux ingrédients d'origine naturelle permet d'augmenter les performances en termes de solubilisation et/ou d'extraction, vraisemblablement en raison du fait de l'apport de l'environnement chimique complexe que représente cet ingrédient d'origine naturelle ou ce mélange d'ingrédients d'origine naturelle. Cet apport apparaît optimal dans le cas du mélange d'au moins deux ingrédients d'origine naturelle tel que défini précédemment.

### Définitions

***Liquides ioniques (LIs)*** : ce sont des sels liquides qui se différencient de l'ensemble des sels fondus par une température de fusion inférieure à 100°C. Un grand nombre d'entre eux sont liquides à température ambiante. Ces solvants sont constitués d'un cation, le plus souvent organique, associé à un anion organique ou inorganique. Des exemples de cations et d'anions communément utilisés pour formuler les liquides ioniques sont les suivants :
- concernant les cations : tetraalkylammonium, tetraalkylphosphonium, alkylmethylimidazolium et trialkyl sulfinium.
- concernant les anions : hexafluorophosphate, chlorure, glulycolate et tetrafluoborate.

***Eutectique** :* on utilise le terme mélange eutectique lorsque le point de fusion, ou point eutectique, d'un mélange d'au moins deux espèces qui s'associent entre elles par des liaisons intermoléculaires non-covalentes (en particulier par des liaisons hydrogènes) est inférieur à celui des deux composés du mélange pris individuellement.

***Ingrédient d'origine naturelle** :* un ingrédient d'origine naturelle est composé d'une au moins matière première d'origine naturelle, présente telle quelle dans la nature et non traitée, ou alors traitée par des procédés physiques et/ou chimiques autorisés selon le référentiel de la norme ISO 16128 partie 1 (intitulée « Lignes directrices relatives aux définitions techniques et aux critères applicables aux ingrédients et produits cosmétiques naturels et biologiques - Partie 1 : Définitions des ingrédients ») ou encore décrits dans la Note d'information n°2009-136 (communicable au sens de la loi du 17 juillet 1978) de la DGCCRF. La ou les matières premières constituant un tel ingrédient d'origine naturelle ne sont pas obtenues par synthèse chimique. Elles peuvent être par exemple d'origine : végétale, minérale, fongique, ou microbienne, un produit de fermentation ou encore des substances actives d'origine naturelle issues de la ruche.

***Liaison hydrogène** :* la liaison hydrogène est une liaison chimique faible, impliquant un atome d'hydrogène à H acide et un atome électronégatif comme l'oxygène, l'azote et le fluor (cf. définition infra). Pour que cette liaison s'établisse, il faut être en présence d'un donneur de liaison hydrogène et d'un accepteur de liaison hydrogène.

***Composé accepteur de liaison hydrogène (composé ALH)*** : composé comprenant au moins un atome électronégatif porteur d'un doublet non liant (comme l'oxygène, l'azote et le fluor) permettant l'établissement d'au moins une liaison hydrogène avec un composé donneur de liaison hydrogène (cf. définition infra). Selon un mode de réalisation, ledit atome électronégatif porteur d'un doublet non liant est un atome d'oxygène, d'azote ou de fluor.

***Composé donneur de liaison hydrogène (composé DLH)*** : composé comprenant au moins un H acide - c'est-à-dire un atome d'hydrogène lié à un hétéroatome (comme dans les amines, alcools, thiols) - permettant l'établissement d'au moins une liaison hydrogène avec un composé accepteur de de liaison hydrogène (cf. définition supra). Selon un mode de réalisation, ledit H acide est présent au niveau d'une fonction amine, alcool ou thiol.

***Acides mono- et pluri-carboxyliques** :* molécules comprenant chacune un ou plusieurs groupes carboxyles (-C(O)OH).

***Groupe carboxyle (également dénommé "fonction acide carboxylique")*** : groupe fonctionnel composé d'un atome de carbone, lié par une double liaison à un atome d'oxygène (O) et lié par une liaison simple à un groupe hydroxyle (-OH).

***Solvants eutectiques profonds (SEPs) (« Deep Eutectic Solvents » en langue anglaise, dont l'acronyme est DESs)*** : les solvants eutectiques profonds consistent en un mélange d'un accepteur de liaison hydrogène (ALH) et d'un donneur de liaison hydrogène (DLH). A titre d'exemples de donneur et d'accepteur de liaison hydrogène communément utilisés pour préparer des SEPs, l'on peut citer :
- à titre d'accepteur de liaison hydrogène : le chlorure de choline, et
- à titre de donneur de liaison hydrogène : l'urée et le 4-chlorophénol.

***Solvants eutectiques profonds d'origine naturelle (SEPsNa) (ou « Natural Deep Eutectic Solvents », en langue anglaise ; acronyme anglais : NADES*)** : solvants eutectiques profonds obtenus à partir de donneurs et d'accepteurs d'hydrogène qui sont d'origine naturelle.

***Composés à polarité intermédiaire** :* un composé à polarité intermédiaire est un composé se situant entre les composés polaires, tels que l'eau, et les composés apolaires, tels que l'huile végétale.

***Acide organique d'origine naturelle** :* par « acide organique d'origine naturelle», l'on entend, au sens de la présente invention, un acide organique (à base de carbone) présent tel quel dans la nature (en particulier naturellement présent dans le règne animal, végétal et/ou fongique) et compatible pour une utilisation pharmaceutique, nutritionnelle, alimentaire et/ou cosmétique.

***Hydrotropes*** : composés qui solubilisent les molécules à polarité intermédiaire et/ou apolaires dans une solution aqueuse. Ils sont typiquement constitués d'une partie hydrophile et d'une partie hydrophobe comme les tensioactifs mais se caractérisent par une concentration hydrotropique minimale (en anglais « MHC » pour *« Minimum Hydrotropic Concentration* »), à partir de laquelle la solubilité des molécules apolaires et/ou à polarité intermédiaire augmente de façon exponentielle.

*Rutine* : la rutine (n°CAS : 153-18-4, synonymes rutoside ou quercétine 3-rutinoside) est un flavonoïde présent dans de nombreux végétaux. Elle a montré des propriétés antiallergiques, antiinflammatoires, antiprolifératives, antioxydantes. Ce bioflavonoïde a de multiples effets sur l'organisme, un des plus importants étant de réduire la fragilité et la perméabilité des capillaires. Les flavonoïdes améliorent aussi l'action de la vitamine C sur l'organisme en augmentant son absorption et en retardant son élimination. On trouve la rutine et ses dérivés synthétiques (la troxérutine par exemple) comme principes actifs de plusieurs médicaments veinotoniques, prescrits en cas de jambes lourdes, de varices, d'hémorroïdes, mais aussi de baisse d'acuité visuelle liée à une fragilité des petits vaisseaux de la rétine **[11].** Tel qu'indiqué au fil de la présente demande de brevet, la rutine est peu soluble dans l'eau puisque son hydrosolubilité est de 0.125 mg/mL, soit 1,25x10⁻⁴ g/mL, selon la Pharmacopée européenne en vigueur (cf. 5.11. Caractères).

***Miel* :** le miel est la substance sucrée naturelle produite par les abeilles de l'espèce *Apis mellifera,* à partir du nectar de plantes ou des sécrétions provenant de parties vivantes des plantes ou des excrétions laissées sur celles-ci par des insectes suceurs, qu'elles butinent, transforment en les combinant avec des matières spécifiques propres, déposent, déshydratent, entreposent et laissent mûrir dans les rayons de la ruche (cf. Directive 2001/110/CE du Conseil du 20 décembre 2001 relative au miel et ses modifications en vigueur (notamment la Directive 2014/63/UE), notamment l'Annexe I relatif aux Dénominations, descriptions et définitions des produits). Tel qu'indiqué en Annexe II de cette Directive modifiée, relative aux caractéristiques de composition des miels, le miel consiste essentiellement en différents sucres mais surtout en fructose et en glucose. La couleur du miel peut aller d'une teinte presque incolore au brun sombre. Il peut avoir une consistance fluide, épaisse ou cristallisée en partie ou en totalité. Le goût et l'arôme varient mais dépendent de l'origine végétale. Selon un mode de réalisation préféré, le miel ne fait l'objet d'aucune addition de produits alimentaires, y compris les additifs alimentaires, ni d'aucune addition autre que du miel. De préférence, le miel est exempt de matières organiques et inorganiques étrangères à sa composition.

***Miel de fleurs** :* le miel de fleurs - ou miel de nectars - est le miel obtenu à partir des nectars de plantes (cf. Directive 2001/110/CE du Conseil du 20 décembre 2001 relative au miel et ses modifications en vigueur (notamment la Directive 2014/63/UE), notamment l'Annexe I relatif aux Dénominations, descriptions et définitions des produits).

***Miel fluide :*** miel présentant une consistance fluide.

***Miel liquide :*** miel présentant une consistance liquide.

***Miel d'oranger :*** miel obtenu à partir des fleurs d'oranger (*Citrus* spp.), et qui répond aux caractéristiques de composition des miels telles que définies dans l'Annexe II de la Directive européenne en vigueur relative au miel.

***Jus de fruits (ou* « *jus de fruit* »)** : un jus de fruits est le produit fermentescible mais non fermenté obtenu à partir des parties comestibles de fruits sains et mûrs, frais ou conservés par réfrigération ou congélation, d'une espèce ou de plusieurs espèces en mélange, possédant la couleur, l'arôme et le goût caractéristiques du jus des fruits dont il provient (cf. Directive 2001/112/CE du 20 décembre 2001 relative aux jus de fruits et à certains produits similaires destinés à l'alimentation humaine, et ses modifications en vigueur (notamment la Directive 2012/12/UE), en particulier l'Annexe I relatif aux Dénominations, définitions des produits et caractéristiques). Les arômes, les pulpes et les cellules obtenus par des moyens physiques appropriés à partir de fruits de la même espèce peuvent être restitués au jus de fruits. Dans le cas des agrumes, le jus de fruits doit provenir de l'endocarpe. Toutefois, le jus de limette peut être obtenu à partir du fruit entier. Lorsque les jus sont obtenus à partir de fruits comprenant des pépins, graines et peaux, les parties ou composantes des pépins, graines et peaux ne sont pas incorporées dans le jus. Cette disposition ne s'applique pas dans les cas où les parties ou composantes des pépins, graines et peaux ne peuvent être éliminées par les bonnes pratiques de fabrication. Le mélange de jus de fruits et de purée de fruits est autorisé dans la production de jus de fruits. Selon un mode de réalisation de l'invention, le jus de fruits est différent du jus de coco (également dénommé « eau de coco » et désignant le liquide contenu dans la cavité centrale de la noix de coco).

***Jus de fruits concentré* (*ou «jus de fruit concentré »)*** : un jus de fruits concentré est le produit obtenu à partir de jus de fruits d'une ou plusieurs espèces de fruits par l'élimination physique d'une partie déterminée de l'eau de constitution (cf. Directive 2001/112/CE du 20 décembre 2001). Selon un mode de réalisation, l'élimination est d'au moins 50% de l'eau de constitution. Les arômes, les pulpes et les cellules obtenus par des moyens physiques appropriés à partir de fruits de la même espèce peuvent être restitués au jus de fruits concentré.

***Jus de pomme concentré (ou* « *jus de pommes concentré »)* :** jus de fruits concentré obtenu à partir du fruit de la plante *Malus domestica* Borkh.

***Echelle de Brix* :** l'échelle de Brix permet de mesurer, en degrés Brix (°B), la fraction de matière sèche dans un liquide, c'est-à-dire le pourcentage de matière sèche dans un liquide.

***Méthode de détermination du degré Brix* :** dans le cadre de la présente invention, le degré Brix est mesuré à une température de 20°C à l'aide d'un réfractomètre, lequel détermine l'indice de réfraction de la lumière d'une matrice. Cette matrice s'observe par la déviation d'un faisceau lumineux selon la nature du milieu dans lequel il se propage. L'angle du faisceau dévie en fonction du taux de matière sèche soluble dans le milieu, plus la consommation de matière sèche soluble est élevée, plus la réfraction est importante.

***Extraction solide-liquide*** : opération consistant à mettre en contact au moins un solide et au moins un liquide, et à séparer, grâce audit au moins un liquide, un ou plusieurs composé(s) soluble(s), « les solutés », contenu(s) dans un matériau solide insoluble. Le ou les liquide(s) d'extraction est/sont appelé(s) solvant(s), le ou le(s) composé(s) soluble(s) peut/peuvent être solide(s) ou liquide(s). Enfin, le solide insoluble peut être massif ou poreux et se présente, en général, sous la forme de particules poreuses ou cellulaires avec des membranes semi-perméables.

***Macération*** : technique d'extraction solide-liquide qui consiste à laisser au moins un corps solide dans un liquide (solvant) ou un mélange de liquides (solvants), généralement froid, pour en extraire les espèces chimiques.

***Macérât :*** produit d'une macération. Il est constitué d'un mélange corps solide/solvant(s).

***Extraction assistée par ultrasons** :* extraction, par exemple solide-liquide, assistée par des ondes ultrasonores qui se propagent à travers les milieux liquides.

***Macération assistée par ultrasons** :* macération assistée par des ondes ultrasonores qui se propagent à travers les milieux liquides.

***Ultrasons** :* terme employé lorsque l'on se réfère à des ondes vibratoires dont la fréquence est supérieure à la limite maximale d'audibilité de l'oreille humaine (20 kHz). Les ultrasons ne présentent pas de différences physiques avec les sons. Plusieurs effets peuvent être attribués à l'utilisation des ultrasons de puissance tels que le déplacement des molécules de liquide autour de leur point d'équilibre ou les déplacements convectifs appelés vents ultrasonores. Lorsque des ultrasons se propagent à travers un liquide, les oscillations des molécules provoquent la formation de zones de compression et de dépression. En dessous d'un certain seuil caractéristique du liquide considéré, les forces maintenant la cohésion du liquide sont vaincues et les bulles de cavitation contenant la vapeur du liquide et des gaz dissous apparaissent. Ce phénomène, appelé cavitation, a été étudié de manière théorique et expérimentale. Le comportement des bulles dépend de leur taille et de la nature du champ ultrasonore local qui détermine la stabilité ou l'implosion de ces cavités comme indiqué dans le document **[8].**

Il y a plusieurs types de bulles de cavitation. Celles dites transitoires n'existent que pendant quelques cycles acoustiques avant d'imploser violemment. Sachant que la durée de vie de telles bulles est trop faible pour observer un transfert de matière par diffusion de gaz vers l'intérieur ou l'extérieur de la bulle, leur implosion ne se trouve pas amortie et procède d'une grande violence. On peut ainsi atteindre des jets à plus de 120 m/s et des pressions de l'ordre de 1000 atmosphères, ce qui permet d'intensifier les modes de transfert liquide-solide et liquide-liquide que ce soit en transfert de matière, de chaleur ou en quantité de mouvement. Les ultrasons ont des actions mécaniques et physiques, notamment lors de l'implosion des bulles de cavitation. La présence d'un obstacle adjacent provoque de plus la perte de symétrie du système par rapport à une implosion au sein de la solution. Le principal effet physique et mécanique des ultrasons est alors la production de micro-jets dirigés vers une surface solide lors de l'implosion des bulles de cavitation. Ces micro-jets peuvent atteindre des vitesses considérables (plus de 120 m/s) et pourraient avoir une influence prépondérante dans les actions induites par la cavitation et dans l'augmentation de l'agitation à l'interface végétal/solvant comme indiqué dans le document **[9].**

A haute intensité, l'onde ultrasonique génère d'intenses forces de pression et de cisaillement ainsi que des gradients de température à travers le matériel végétal. Ce dernier peut physiquement se rompre. L'énergie ultrasonore résultante peut ainsi améliorer les transferts de chaleur, de matière ou bien de quantité de mouvement. Dans de nombreuses applications, la technologie des ultrasons possède des avantages considérables par rapport aux autres technologies conventionnelles. Les ultrasons améliorent notamment les qualités organoleptiques ainsi que les propriétés visuelles du produit alimentaire final destiné à la consommation humaine.

***Matériel végétal, fongique, animal et*/*ou microbien*** (également dénommé « substrat végétal, fongique, animal et/ou microbien ») : s'entend de toute matière de nature végétale, fongique, animale et/ou microbienne à partir de laquelle un ou plusieurs composé(s) d'intérêt est/sont extrait(s) par une opération d'extraction.

***Matériel fongique*** (également dénommé « substrat fongique ») : s'entend de toute matière fongique (telle que champignon(s), lichen(s), partie(s) de champignons et/ou de lichens) entière ou dont la taille a été réduite si opportun/nécessaire, par exemple par fragmentation (cassure, écrasement etc.), coupe, broyage ou pulvérisation. Le matériel fongique peut être utilisé sous forme desséchée ou à l'état frais.

***Matériel végétal*** (également dénommé « substrat végétal ») : s'entend de toute matière végétale (telle que plantes, partie(s) de plantes, fruits, algues, ou leurs mélanges), entière ou dont la taille a été réduite si opportun/nécessaire, par exemple par fragmentation (cassure, écrasement etc.), coupe, broyage ou pulvérisation. Le matériel végétal peut être utilisé sous forme desséchée ou à l'état frais. Selon l'invention, le matériel végétal est choisi de préférence parmi le bois, les tiges, les pétales, les feuilles, les parties aériennes, les racines, les rhizomes, les sommités fleuries, les fleurs, le germe, les écorces, les graines, les fruits ou leurs mélanges.

Dans le cas où le matériel biologique est une plante, l'extraction peut être effectuée à partir de l'ensemble de la plante ou d'une ou plusieurs parties de la plante, et notamment choisie parmi la racine, la tige, l'écorce, la fleur, la graine, le germe et/ou la feuille et leurs mélanges.

Selon un mode avantageux, il s'agit préférentiellement des parties aériennes c'est-à-dire les feuilles et les tiges, et préférentiellement les feuilles.

Selon un mode de réalisation de l'invention, le matériel végétal et/ou ou fongique est sélectionné parmi la liste non-exhaustive suivante :
*Allium sativum, Medicago sativa, Aloe barbadensis, A. ferox, A. vera, A. comosus (= A. sativus), Angelica archangelica (=A. officinalis), Hippophae rhamnoides, Artemisia vulgaris, Arnica montana, Cynara scolymus, Withania somnifera, Astragalus membranaceus, Astragalus mongholicus, Calluna vulgaris, Crataegus azarolus, Crataegus oxyacantha, Crataegus monogyna, Crataegus laevigata, Crataegus.pentagyna, Crataegus.nigra, Avena sativa, Bacopa monnieri, Ballota nigra , Bambusa bambos (= B. arundinacea), Arctium lappa (= A. majus, L. major), Ocimum sanctum, Citrus aurantium var aurantium, Verbascum thapsus, V. densiflorum, Betula pendula, Betula pubescens, Rhamnus frangula (=Frangus alnus), Boswellia carteri, B. serrata, Borago officinalis, Buxux sempervirens, Arctostaphylos uva-ursi , Theobroma cacao, Vaccinium macrocarpon, Cinnamomum verum (= C. zeylanicum), Cinnamomum cassia (= C. aromaticum), Ceratonia siliqua 29, Rhamnus purshianus (= Frangula purschiana), Ribes nigrum, Silybum marianum, Cichorium intybus, Agropyron repens 34, Chrysanthellum indicum, Cimicifuga racemosa (= Actea racemosa), Coleus forksohili, Papaver rhoeas, Cucurbita pepo, Curcuma longa, Cupressus sempervirens, Echinacea angustifolia, A. pallida, E. purpurea, Eleutherococcus senticosus, Ephedra sp, Eschscholtzia californica, Eucalyptus globulus, Eucalyptus radiata, Eupatorium cannabinum, Trigonella foenum-graecum, Ruscus aculeatus, Fraxinus excelsior, F. oxyphylla, Fucus vesiculosus, F. serratus, Fumaria officinalis, Vitex agnus-castus, Juniperus communis, Gentiana lutea, Zingiber officinale, Ginkgo biloba, Panax ginseng, Tanacetum parthenium, Chrysanthemum parthenium), Uncaria tomentosa, Paullinia cupana, Viscum album, Commiphera mukul, Hamamelis virginiana, Harpagophytum procumbens, Harpagophytum zeyheri, Humulus lupulus, Hydrastis canadensis, Plantago ovata, Sterculia urens, Piper methysticum, Cola nitida, Lavandula angustifolia, L. officinalis, L. vera, Hedera helix, Glechoma hederacea, Linum usitatissimum, Zea mays, Aesculus hippocastanum 73, Marrubium album, Ilex paraguariensis, Matricaria recutita, Malva sylvestris, Melilotus officinalis, Melissa officinalis, Mentha piperita, Menyanthes trifoliata, Hypericum perforatum, Commiphora molmol, Vaccinium myrtillus, Nigella sativa, Olea europaea, Oenothera biennis, Ulmus rubra (= Ulmus fulva), Orthosiphon stamineus, Urtica dioica, Sabal serrulata, Serenoa repens, Carica papaya, Passiflora incarnata, Pelargonium sidoides, Voola tricolor, V. arvensis, Vinca minor, Phyllanthus niruri, Hieracium pilosella, Pinus sylvestris, Taraxacum officinalis, Plantago major, Portulacca oleracea, Equisetum arvense, Equisetum hiemale, Artemisia annua, Cinchona sp, Raphanus sativus, Ulmaria filipendula (=Spiraea ulmaria), Rosmarinus officinalis, Salvia officinalis, Salix sp (Salix alba, S. fragilis, S. purpurea), Scutellaria baicalensis, Cassia senna, Cassia angustifolia, Lentinus edoda, Glycine max, Solidago virga aurea, Calendula officinalis, Sambucus nigra, Camellia sinensis (= C. thea, Thea sinensis), Sophora japonica, Thymus vulgaris, Tilia cordata, T. platyphyllos, T. sylvestris, Trifolium pratense, Urtica urens, Valeriana officinalis, Erigeron canadensis, Vitis vinifera rubra, Pausinystalia yohimbe, et leurs mélanges.*

***Composé bioactif*** : composé possédant - ou étant susceptible de posséder - une activité pharmacologique, métabolique, immunologique et/ou physiologique chez l'homme ou l'animal.

**Pressage** : opération de séparation solide-liquide par pression, exercée sur le macérât végétal aqueux (à savoir postérieurement à l'étape de macération), permettant la séparation du macérât végétal aqueux liquide et du substrat végétal épuisé (gâteau de filtrat de plante(s)). Cette opération permet la récupération du macérât végétal aqueux liquide (par exemple sous forme de suspension aqueuse) non retenue par le substrat végétal.

***Réduction de la taille du matériel végétal, fongique, animal et*/*****ou microbien** :* opération - ou ensemble d'opérations - consistant à réduire la taille dudit matériel végétal, fongique, animal et/ou microbien (en particulier du matériel végétal, fongique et/ou animal) à partir duquel l'on souhaite effectuer au moins une opération de solubilisation et/ou d'extraction. Tel qu'indiqué précédemment, cette réduction peut être obtenue, par exemple, par fragmentation (cassure, écrasement etc.), coupe, broyage ou pulvérisation du matériel d'intérêt (en particulier du matériel végétal, fongique et/ou animal).

***Dispositif médical** :* tout instrument, appareil, équipement, logiciel, implant, réactif, matière ou autre article, destiné par le fabricant à être utilisé, seul ou en association, chez l'homme pour l'une ou plusieurs des fins médicales précises suivantes: - diagnostic, prévention, contrôle, prédiction, pronostic, traitement ou atténuation d'une maladie, - diagnostic, contrôle, traitement, atténuation d'une blessure ou d'un handicap ou compensation de ceux-ci, - investigation, remplacement ou modification d'une structure ou fonction anatomique ou d'un processus ou état physiologique ou pathologique, - communication d'informations au moyen d'un examen in vitro d'échantillons provenant du corps humain, y compris les dons d'organes, de sang et de tissus, et dont l'action principale voulue dans ou sur le corps humain n'est pas obtenue par des moyens pharmacologiques ou immunologiques ni par métabolisme, mais dont la fonction peut être assistée par de tels moyens (cf. Règlement (UE) 2017/745).

La présente invention trouve notamment à s'appliquer au domaine des dispositifs médicaux.

***Complément alimentaire*** : composition à usage humain ou animal (de préférence à usage humain) dont le but est de compléter le régime normal et qui constitue une source concentrée de nutriments ou d'autres substances ayant un effet nutritionnel ou physiologique, seuls ou combinés, commercialisés sous forme de doses, à savoir les formes de présentation telles que les gélules, les pastilles, les comprimés, les pilules et autres formes similaires, ainsi que les sachets de poudre, les ampoules de liquide, les flacons munis d'un compte-gouttes et les autres formes analogues de préparations liquides ou en poudre destinées à être prises en unités mesurées de faible quantité.

La présente invention trouve notamment à s'appliquer au domaine des compléments alimentaires à usage humain ou animal, de préférence à usage humain.

***Aliments diététiques destinés* à *des fins médicales spéciales (ADDFMS)*** : conformément à la législation française, et plus particulièrement à l'Article L5137-1 du Code de la santé publique, « On entend par aliments diététiques destinés à des fins médicales spéciales les aliments destinés à une alimentation particulière qui sont spécialement traités ou formulés pour répondre aux besoins nutritionnels des patients. Ils sont destinés à constituer l'alimentation exclusive ou partielle des patients dont les capacités d'absorption, de digestion, d'assimilation, de métabolisation ou d'excrétion des aliments ordinaires ou de certains de leurs ingrédients ou métabolites sont diminuées, limitées ou perturbées, ou dont l'état de santé appelle d'autres besoins nutritionnels particuliers qui ne peuvent être satisfaits par une modification du régime alimentaire normal ou par un régime constitué d'aliments destinés à une alimentation particulière ou par une combinaison des deux ».

La présente invention trouve notamment à s'appliquer au domaine des ADDFMS.

***Pluralité** :* deux ou plus.

### Brève description des dessins

Certains aspects de l'invention seront mieux appréhendés à la lecture de la description détaillée présentée ci-après, faite en référence aux figures 1 à 12, dans lesquelles :
- la figure 1 représente la structure chimique de la rutine (C₂₇H₃₀O₁₆) et permet d'appréhender les charges positives et négatives portées par cette molécule,
- la figure 2 est un diagramme en bâtons présentant les résultats expérimentaux de l'exemple 1,
- la figure 3 est un diagramme en bâtons présentant les résultats expérimentaux (comparatifs) de l'exemple 2,
- la figure 4 est un graphique présentant les résultats expérimentaux de l'exemple 3,
- la figure 5 est un diagramme en bâtons présentant les résultats expérimentaux de l'exemple 4,
- la figure 6 est un graphique présentant les résultats expérimentaux de l'exemple 5,
- la figure 7 est un graphique présentant les résultats expérimentaux de l'exemple 6 obtenus en mettant en œuvre le solvant « NADES Inv. » selon un mode de réalisation de l'invention,
- la figure 8 est un diagramme en bâtons présentant les résultats expérimentaux de l'exemple 7 obtenus en mettant en œuvre le susdit solvant « NADES Inv. » selon un mode de réalisation de l'invention mais également le solvant « NADES Inv.^{(N)} » selon un autre mode de réalisation de l'invention,
- les figures 9 et 10 sont des diagrammes en bâtons présentant les résultats de l'exemple 8,
- les figures 11 et 12 sont des diagrammes en bâtons présentant les résultats de l'exemple 9.

### Description détaillée

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

### Exemples

Matériel et Méthodes utilisés aux fins des présents exemples

### A. Matériels végétaux

Matériels végétaux utilisés : les fleurs de Sophora (Sophora *japonica L.*) - et plus précisément les boutons floraux -, les feuilles de romarin (*Rosmarinus officinalis L*.) et les feuilles d'artichaut (*Cynara scolymus L*.).

### B. Etude du pouvoir de solubilisation

### B.1 Solvants de référence

L'eau distillée est utilisée comme solvant de référence dans les essais de solubilité (solubilisation).

En outre, le méthanol et l'éthanol sont utilisés comme solvants organiques de référence dans l'essai objet de l'exemple 1.

Par ailleurs, un NADES de référence, comprenant un mélange ternaire de molécules pures de glucose, d'acide malique et d'eau (Glu : AM : H₂O) (1 : 1 : 4,36) est utilisé dans l'exemple 2.

### B.2 Préparation des solvants comprenant des mélanges d'ingrédients d'origine naturelle

Dans un premier temps, des mélanges d'ingrédients d'origine naturelle, selon un mode préféré de l'invention, ont été explorés en tant que solvant pour la solubilisation et, par la suite, pour l'extraction de composés végétaux dits « à polarité intermédiaire ». Ces ingrédients d'origine naturelle, particulièrement préféré au sens de la présente invention, sont les miels, tels que le miel de fleurs, et les jus de fruits, tels que les jus de fruits concentrés (comme, par exemple, le jus de pomme concentré). Les teneurs en eau (méthode Karl-Fisher) et les compositions de ces jus et miels, obtenus auprès des Laboratoires Arkopharma, sont présentées au sein du tableau 1 infra.

**Tableau 1**

| Ingrédient d'origine naturelle | Eau | Glucose | Fructose | Acide malique | Acide citrique | Brix (à 20°C) |
|---|---|---|---|---|---|---|
| | (%) | (g/100g) | (g/100g) | (g/100g) | (g/100g) | |
| Miel liquide | 18,13±0,12 | 32,59±4,56 | 33,95±4,75 | - | - | 81,87±0,12 |
| Miel d'oranger | 17,84±0,15 | 29,87±4,18 | 34,24±4,79 | - | - | 82,16±0,15 |
| Miel de fleurs | 17,57±0,07 | 33,35±4,67 | 37,43±5,24 | - | - | 82,43±0,07 |
| Jus de pomme concentré | 29,3±0,14 | - | - | 1,72±0,22 | 0,28 ± 0,01 | 70,7±0,14 |
| Jus d'orange concentré | 36,64±0,025 | - | - | 0,56±0,1 | 4,69±0,19 | 63,36±0,025 |

Des mélanges de jus de fruits concentrés et de miels ont été préparés selon un mode de réalisation de l'invention. Plus précisément, l'on mélange 50% en poids d'un des miels présentés dans le tableau 1 supra avec 50% en poids d'un des deux jus de fruits concentrés également mentionnés au sein du tableau 1 supra. Aux fins des exemples 2 et suivants présentés ci-après, le mélange miel de fleurs/jus de pomme concentré dans un ratio en poids 50/50 a été testé. Dans un souci de concision, le mélange ainsi obtenu est désigné ci-après « NADES Inv ». En outre, est également testé au sein des exemples 7 et suivants une version diluée du « NADES Inv », constitué de 20% en poids de « NADES Inv. » et de 80% d'eau ajoutée (à savoir eau distillée, également dénommée eau exogène). Le fait d'ajouter 80% d'eau distillée au solvant « NADES Inv » entraîne une forte dilution, réduisant son degré Brix de 76,6° à 15,3°. La solution obtenue correspond parfaitement aux caractéristiques d'un jus de fruits « naturel » non concentré, raison pour laquelle ce solvant eutectique profond selon un mode de réalisation de l'invention est désigné ci-après « NADES Inv. naturel » ou encore « NADES Inv.^{(N)} ».

Les jus de fruits sont riches en acides organiques, tels que l'acide malique (par exemple dans le cas du jus de pomme) et/ou l'acide citrique (par exemple dans le cas du jus d'orange), avec la présence d'au moins deux acides organiques comme l'acide malique et l'acide citrique (comme l'illustre le tableau 1 supra), et peuvent contenir d'autres acides organiques comme l'acide tartrique. Quant aux miels, ils sont très riches en sucres et notamment en glucose et fructose (comme l'illustre également le tableau 1 supra), peuvent contenir d'autres sucres comme le saccharose et contiennent des quantités non négligeables d'eau.

Contrairement aux NADES de l'art antérieur, lesquels sont généralement des systèmes binaires comprenant un composé accepteur de liaison hydrogène et un composé donneur de liaison hydrogène, le mélange miel / jus de fruits selon l'invention permet d'obtenir un système que l'on peut qualifier de « multi-NADES ». La présence d'au moins deux acides organiques (donneurs de liaison hydrogène) et d'au moins deux sucres (accepteurs de liaison hydrogène), permet d'avoir donc d'avoir un « multi-NADES » dans le milieu, correspondant à 2² (soit 4) combinaisons possibles de NADES dans le cas de la présence de deux acides organiques et de deux sucres. Il est connu que les jus de fruits comprennent généralement plus de deux acides organiques et que les miels comprennent généralement plus de deux sucres. Dans le cas de la présence de trois acides organiques et de trois sucres par exemple, cela représente neuf possibilités de NADES, ce qui s'avère avantageux.

Chaque mélange d'ingrédients d'origine naturelle a été placé dans un réacteur à double-enveloppe sous agitation mécanique (IKA-Werk, Janke & Kunkel, RW20 basis, France) à 350 rpm. La température a été maintenue à 60 ± 2°C pendant 60 minutes (min) en utilisant un système de thermorégulation (Huber, Allemagne). Les solutions visqueuses obtenues ont été ensuite utilisées comme solvants d'extraction.

### B.3 Caractérisation des solvants

Les différents mélanges formulés ont été caractérisés par leurs propriétés physico-chimiques.

### B.3.a Détermination de la viscosité

La viscosité des solvants testés a été évaluée en utilisant un rhéomètre Physica MCR 301 (Anton Paar, France). Les expériences ont été réalisées en utilisant la géométrie cup-and-bob. Dans le cas des échantillons fortement concentrés, on a utilisé du MCR-301 présentant une géométrie cône et plaque (cône = 25 mm / 2 °, plaque = 50 mm). La plage de vitesse de cisaillement couverte va de 1000 à 10 s^{-l}. Pour évaluer l'impact lié à la température, les tests de viscosité ont été effectués à deux températures différentes : à 25°C et à 60°C.

### B.4 Détermination du pouvoir de solubilisation

### B.4.a Choix du modèle d'étude pour les tests de solubilité

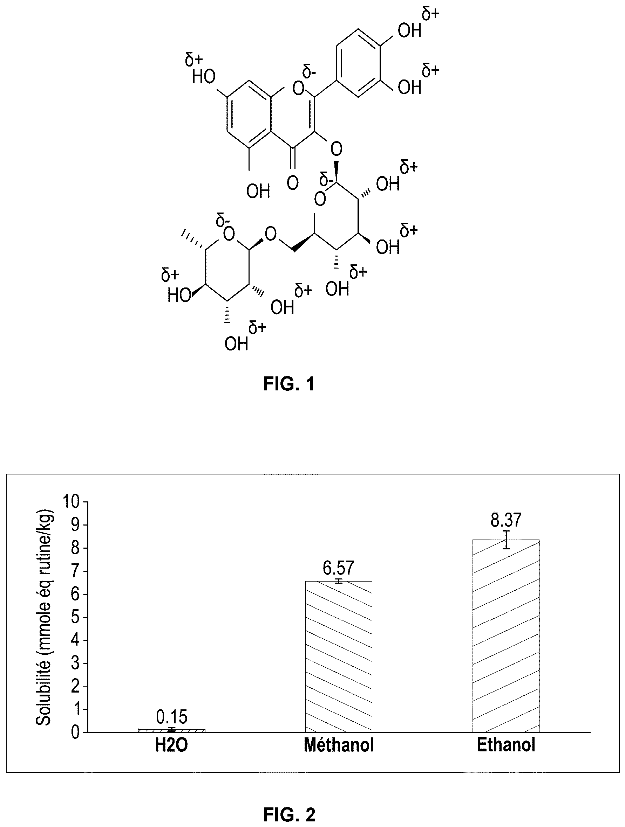

La rutine a été sélectionnée comme molécule cible aux fins des tests de solubilité (visant à déterminer le pouvoir de solubilisation des solvants d'extraction). Le choix de cette molécule comme modèle d'étude se justifie par sa faible solubilité dans l'eau, qui est de l'ordre de 0,36 mmole/kg à 25°C (cf. [7]). La structure chimique de la rutine (C₂₇H₃₀O₁₆) est présentée en figure 1.

Sans être liés par la théorie, et même si la présence de multiples groupements hydroxyles devrait, en théorie, lui conférer une certaine affinité pour l'eau, sa faible hydrosolubilité pourrait s'expliquer par un phénomène d'auto-agrégation (ou encore d'empilement) des noyaux aromatiques présents au sein de cette molécule.

La rutine est un flavonoïde présentant un grand intérêt pour les industries pharmaceutique, nutraceutique, cosmétique et du complément alimentaire. Tel qu'indiqué précédemment, elle est naturellement présente dans plusieurs familles de plantes et notamment au sein des fleurs (et plus précisément des boutons floraux) de *Sophora japonica (Styphnolobium japonicum),* d'où son appellation de "sophorine". Comme d'autres flavonoïdes, il est primordial de trouver des solvants « verts » (solvants alternatifs d'origine naturelle) qui sont capables de la solubiliser et de l'extraire.

### B.4.b Tests de solubilité de la rutine

Un standard de la rutine (pureté 98%) a été utilisé pour les tests de solubilisation qui consistent à saturer les mélanges d'ingrédients d'origine naturelle et les solvants de référence avec la molécule cible (la rutine). Le mélange a été mis dans un réacteur à double enveloppe sous agitation magnétique (Bioblock scientific, AM 3001K) à 300 rpm pendant 60 min à deux températures différentes (25°C et 60°C). Pour mettre en évidence l'impact éventuel des ultrasons (US) sur la solubilisation de la rutine dans les différents solvants d'extraction, les pouvoirs de solubilisation desdits solvants ont été évalués en utilisant une sonde à ultrasons (20kHz, 130W, vibra-cell^{™}-75186, Thermo Fisher Scientific/Bioblock Scientific, France) à une amplitude de 70% en alternant des cycles on/off (20 s on suivies de 10 s off). La température a été contrôlée à l'aide d'une sonde de température externe pour la maintenir à la température désirée (25°C et 60°C).

L'effet de la dilution a été également étudié. Différentes quantités d'eau allant de 0 à 100% (m/m) ont été ajoutées au mélange d'ingrédients d'origine naturelle. Les pouvoirs de solubilisation des solutions diluées ont été ensuite évalués et représentés sous forme de courbe : Solubilité (mmole éq de rutine/kg de solvant) = f (% mélange d'ingrédients d'origine naturelle dans le mélange final, m/m).

Les mélanges solvant-rutine ont été ensuite centrifugés à 8000 rpm (Sigma, 4-16 KS, France) pendant 30 minutes afin d'éliminer la fraction insolubilisée de la rutine. Le surnageant, qui représente la fraction solubilisée, a été alors récupéré, dilué dans le DMSO et analysé par spectroscopie UV-VIS (Biochrom libra, S22, England) à 358 nm. Les concentrations, exprimées en équivalent de rutine par kilogramme (kg) de solvant, ont été calculées en se basant sur les valeurs d'absorbance des solutions diluées et sur la courbe d'étalonnage de la rutine (0-22 µg.mL⁻¹). Chaque expérience a été réalisée en triplicat.

### C. Etude du pouvoir d'extraction

### C.1 Extraction solide-liquide

Les solvants « NADES Inv. » et « NADES Inv.^{(N)} » selon l'invention (cf. section B.2 supra) ont été utilisés comme solvant d'extraction, afin de réaliser une extraction à partir de plusieurs plantes aromatiques et médicinales, à savoir la *Sophora japonica L.* (*Styphnolobium japononicum ;* fleurs (et plus précisément boutons floraux)), le romarin (*Rosmarinus officinalis L*.) (feuilles) et l'artichaut (*Cynara scolymus L*.) (feuilles).

Pour commencer, le pouvoir d'extraction de la rutine à partir des fleurs de Sophora a été évalué. L'effet de la dilution a été également étudié. Pour ce faire, deux procédés d'extraction ont été réalisés :
(i) Extraction par macération assistée par ultrasons, et
(ii) extraction conventionnelle par macération.

Concernant l'extraction assistée par ultrasons, les boutons floraux de Sophora non-broyés ont été immergés dans le solvant à un ratio 1/10 et soumis aux ultrasons pendant 60 min à l'aide d'un réacteur à ultrasons (25kHz, 150 W, Pex1, REUS, France). Le matériel végétal a été homogénéisé dans le solvant en utilisant un agitateur mécanique (IKA-Werk, Janke & Kunkel, RW20 basis, France) à 350 rpm. La température d'extraction a été maintenue constante à 60 ± 2° C en utilisant un système de thermorégulation (Ministat 125, Huber, Allemagne) connecté à la double enveloppe du réacteur.

L'extraction conventionnelle a été réalisée par macération dans les mêmes conditions opératoires en l'absence des ultrasons. Chaque expérience a été réalisée en triplicat. D'autres essais ont été effectués avec les fleurs de Sophora broyées dans les mêmes conditions décrites précédemment, afin de mettre en évidence l'effet du broyage sur la performance d'extraction.

L'extraction solide-liquide par macération a été suivie d'une étape de filtration et d'une étape de centrifugation (8000 rpm, 30 min) afin de récupérer l'extrait liquide final. Deux solvants ont été sélectionnés en se basant sur ces résultats préliminaires. Les essais ont ensuite été élargis sur d'autres matériels végétaux dans le but d'évaluer le pouvoir d'extraction de ces solvants sur d'autres molécules telles que l'acide rosmarinique (AR) et l'acide carnosique (AC).

### C.2 Caractérisation des extraits liquides obtenus par analyse UHPLC

Les dosages UHPLC (Chromatographie en phase liquide à haute performance) ont été réalisés sur une UHPLC (Thermo Ultimate ^{™} 3000) équipée d'un détecteur à barrettes de diodes. Toutes les analyses ont été traitées par le logiciel Empower. Les protocoles expérimentaux spécifiques aux différents extraits des plantes étudiées (Sophora, romarin et artichaut) sont détaillés ci-dessous dans le cas de chaque plante.

### C.2.a Rutine à partir des fleurs de Sophora :

Tel qu'indiqué précédemment, le dosage de la rutine représente un indicateur de l'efficacité du procédé et du solvant d'extraction. L'analyse UHPLC a été procédée comme suit : 1,5 µL de la solution de l'extrait des fleurs, préalablement dilué dans l'acétonitrile 20 % (V/V), ont été injectés et élués en utilisant une colonne C18 (1,7 µm, 2,1 mm x 100, Zorbax SB Aq C18, Thermo scientific) à 25°C et un débit de 0,45 mL.min⁻¹. La séparation des composés a été réalisée en utilisant un système de solvants A (H₂O/Acétonitrile 97/3 V/V (0,05 % of TFA)) et B : Acétonitrile (0,05% TFA). Le gradient d'élution est présenté dans le tableau 2 infra.

La rutine a été détectée à 340 nm et quantifiée en se basant sur sa courbe de calibration (à savoir par rapport à une solution de concentration connue de substance de référence de rutine injectée dans les mêmes conditions).

**Tableau 2**

| Temps (min) | Phase mobile voie A (%) | Phase mobile voie B (%) |
|---|---|---|
| 0 | 100 | 0 |
| 0,5 | 100 | 0 |
| 2 | 94,5 | 5,5 |
| 11 | 90,7 | 9,3 |
| 14,5 | 88 | 12 |
| 15 | 80 | 20 |
| 17 | 70 | 30 |
| 19 | 70 | 30 |
| 19,2 | 100 | 0 |
| 24 | 100 | 0 |

### C.2.b Acides rosmarinique et carnosique à partir des feuilles de romarin broyées (au moyen de broyeurs verticaux à couteaux)

Le romarin, *Rosmarinus officinalis L.,* est une plante méditerranéenne particulièrement connue pour sa richesse en composés actifs. Les antioxydants les plus connus et les plus valorisés des feuilles de romarin sont l'acide rosmarinique et l'acide carnosique. Ainsi, la performance du procédé et du solvant d'extraction peut être évaluée en se basant sur les rendements en ces deux molécules d'intérêt.

Pour ce faire, les extraits de romarin ont été analysés par UHPLC. 1 µL de la solution de l'extrait de romarin, préalablement diluée dans l'acétonitrile 20 % (V/V), a été injecté et élué à travers la colonne C18 column (2,8 µm, 2,1 mm x 50, Zorbax SB Aq C18, Thermo scientific).

La colonne a été maintenue à une température de 30°C. Le débit était de 0,7 mL.min⁻¹.

Le système de solvants utilisés était un gradient de A H₂O/Acétonitrile 97/3 V/V (0,05 % de TFA) et B (eau/ acide formique 0,5 %) avec les gradients cités dans le tableau 3 infra.

La détection de l'acide rosmarinique a été faite à 330 nm ; celle de l'acide carnosique à 285 nm.

**Tableau 3**

| Temps (min) | Phase mobile voie A (%) | Phase mobile voie B (%) |
|---|---|---|
| 0 | 100 | 0 |
| 0,5 | 100 | 0 |
| 3 | 92 | 8 |
| 15 | 86,5 | 13,5 |
| 15,5 | 75 | 25 |
| 22 | 45 | 55 |
| 22,3 | 100 | 0 |
| 27 | 100 | 0 |

### C.2.c. Acide chlorogénique et cynaroside et à partir des feuilles d'artichaut sans et avec broyage

Les performances d'extraction à partir des feuilles d'artichaut ont été évaluées en termes des teneurs en acide chlorogénique et en cynaroside. Pour déterminer les quantités de ces deux molécules, 1 µl de la solution d'extrait a été injecté et élué en utilisant une colonne C18 (2,5 µm, 3 mm x 100, Zorbax SB Aq C18, Thermo scientific). Cette colonne a été maintenue à 25°C avec un débit de 0,4 mL.min⁻¹.

Le gradient d'élution des systèmes solvants A : H₂O/Acétonitrile 97/3 V/V (0,05 % of TFA) et B : Acétonitrile (0,05% TFA) est présenté dans le tableau 4 ci-dessous.

**Tableau 4**

| Temps (min) | Phase mobile voie A (%) | Phase mobile voie B (%) |
|---|---|---|
| 0 | 90 | 10 |
| 1,88 | 90 | 10 |
| 8,75 | 88,7 | 11,3 |
| 9,38 | 80 | 20 |
| 15 | 80 | 20 |
| 15,63 | 75 | 25 |
| 18,75 | 75 | 25 |
| 25 | 60 | 40 |
| 27 | 60 | 40 |
| 27,5 | 90 | 10 |
| 32 | 90 | 10 |

La détection a été faite à 325 nm pour l'acide chlorogénique et à 350 nm pour le cymaroside.

### Exemple 1 : Solubilité de la rutine dans l'eau et dans des solvants organiques de référence

Tel qu'indiqué précédemment, la rutine est un flavonoïde très faiblement soluble dans l'eau et possède une meilleure solubilité dans des solvants organiques tels que l'éthanol et le méthanol. Tel qu'indiqué au point B.1 supra, la solubilité dans l'eau distillée, l'éthanol et le méthanol a été évaluée. Les résultats de ces tests de solubilité (à 25°C) sont présentés en figure 2.

Comme montré en figure 2, l'éthanol est le solvant le plus adapté à la solubilisation de la rutine avec un pouvoir de solubilisation représentant 55,8 fois celui de l'eau et 1,27 fois celui du méthanol.

### Exemple 2 : Comparaison du pouvoir solubilisant des solvants eutectiques profond selon l'invention avec un NADES de référence

Afin de pouvoir utiliser un solvant pour l'extraction, de manière efficace, il est indispensable que ledit solvant d'extraction possède un bon pouvoir de solubilisation. En effet, si le solvant ne solubilise pas le ou les composé(s) d'intérêt, il sera difficile d'atteindre des rendements acceptables. Il s'avère ainsi primordial d'évaluer le pouvoir de solubilisation d'un solvant eutectique profond selon l'invention (dénommé «NADES Inv.» au sein des présents exemples), préalablement à l'étude de son potentiel d'extraction.

Des mélanges de miel de fleurs et de jus de pomme concentré (répondant parfaitement aux critères de naturalité, de biocompatibilité et de biodégradabilité requis) ont été formulés comme mentionnés au sein de la section « Matériels et méthodes » (cf. section B.2 supra).

Des tests de solubilité de la rutine à 60°C ont été réalisés dans :
- L'eau,
- Le susdit « NADES Inv. », et
- Le NADES de référence comprenant un mélange ternaire de molécules pures de glucose, d'acide malique et d'eau (Glu : AM : H₂O) (1 : 1 : 4,36) (cf. « Matériels et méthodes », section B.2 supra).

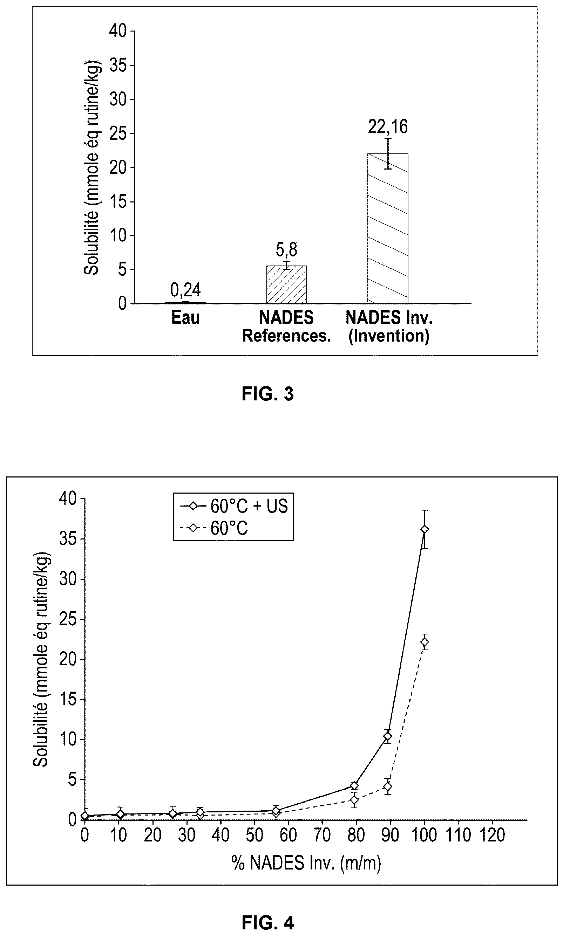

La figure 3 présente les résultats obtenus.

Comme représenté sur cette figure 3, le pouvoir de solubilisation de la rutine dans ce « NADES Inv. » est égal à 22,16 mmole éq de rutine/kg, ce qui est 3,8 fois celui du NADES de référence. Sans être liés par la théorie, ceci pourrait s'expliquer par le fait que les ingrédients d'origine naturelle comme le miel de fleurs et le jus de pomme concentré représentent des environnements chimiques complexes, contenant notamment d'autres métabolites primaires tels que les amines, les vitamines mais également, de manière fort intéressante, d'autres glucides que le glucose (fructose, saccharose, etc.) et d'autres acides organiques naturels que l'acide malique (par exemple l'acide citrique). Cet environnement chimique complexe pourrait expliquer la très forte augmentation de la solubilisation de la rutine que l'on observe entre l'utilisation du NADES de référence et du « NADES Inv. ».

### Exemple 3 : Evaluation de l'effet des ultrasons sur le pouvoir de solubilisation d'un solvant selon l'invention (« NADES Inv. »)

Les résultats concernant l'impact des ultrasons (cf. « Matériels et méthodes » supra, et en particulier section B.4.b) sur le pouvoir de solubilisation du « NADES Inv. » concernant la rutine sont présentés en figure 4.

Tel que montré en figure 4, l'utilisation d'ultrasons améliore davantage le pouvoir de solubilisation du « NADES Inv. » sur la rutine (pouvoir qui était déjà très important), lequel passe de 22,16 à 36,18 mmole éq de rutine/kg.

### Exemple 4 : Evaluation de la solubilité de la rutine dans d'autres solvants eutectiques profonds d'origine naturelle selon l'invention

Le présent exemple vise à évaluer le pouvoir de solubilisation, sur la rutine, d'autres ingrédients d'origine naturelle que ceux utilisés aux fins de la préparation du solvant selon l'invention « NADES Inv. », mis en œuvre dans l'exemple précédent, à savoir le miel d'oranger et le miel liquide (en sus du jus de pomme concentré).

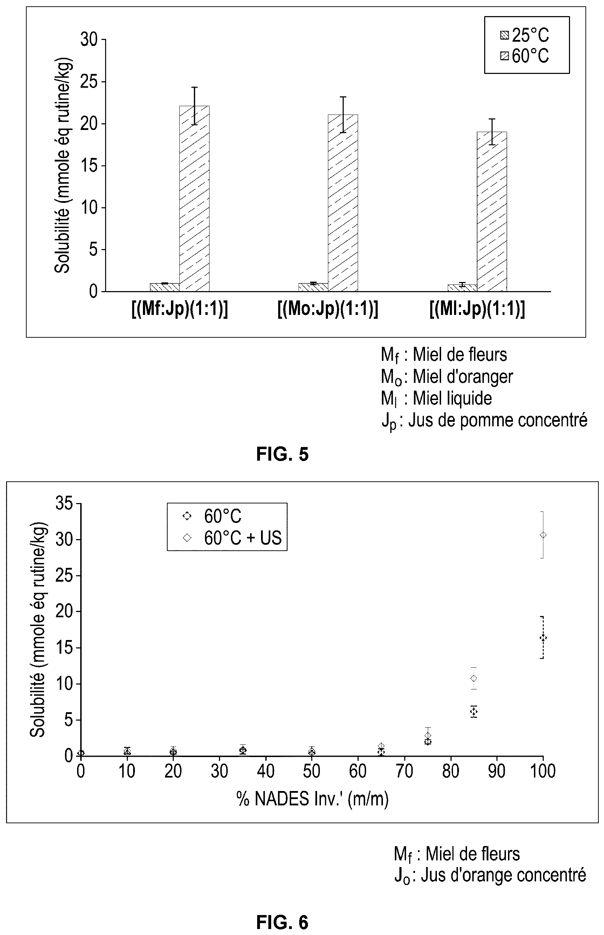

En premier lieu, le pouvoir de solubilisation, sur la rutine, du jus de pomme concentré en mélange avec les différents miels a été testé à 25°C et à 60°C. Les résultats sont présentés en figure 5.

Comme montré en figure 5, les solvants eutectiques profonds d'origine naturelle selon l'invention préparés à base des trois miels testés présentent un fort potentiel de solubilisation de la rutine. Ces systèmes apparaissent dotés de pouvoirs solvants similaires, et ce quelle que soit la température. Ces résultats confirment la possibilité d'utiliser différents miels (voir même des mélanges composés de différents miels) pour formuler des solvants eutectiques profonds d'origine naturelle selon l'invention à forts potentiels de solubilisation (en particulier sur les composés à polarité intermédiaire).

La figure 5 nous enseigne également que la température module les pouvoirs de solubilisation des trois solvants selon l'invention. Comme cela est montré en figure 5, même si la rutine est solubilisée en mettant en œuvre les solvants selon l'invention, les meilleurs pouvoirs solvants ont été obtenus à une température de 60°C, laquelle représente donc une température particulièrement préférée pour mettre en œuvre un procédé de solubilisation et/ou d'extraction selon l'invention, impliquant un solvant selon l'invention.

En conclusion, et tel qu'indiqué précédemment, le miel (ou un mélange de miels) est un ingrédient d'origine naturelle particulièrement préféré au sens de la présente invention afin de préparer des solvants eutectiques efficaces et « verts », et ce quelle que soit la source du miel utilisée.

### Exemple 5 : Evaluation de l'impact de la substitution du jus de pomme concentré par du jus d'orange concentré, de la dilution et des ultrasons

Au sein du présent exemple, ont été testés :
- les conséquences éventuelles de la substitution du jus de pomme concentré dans le solvant « NADES Inv. » (solvant selon un mode de réalisation de l'invention) par un jus d'orange concentré sur le pouvoir de solubilisation de ce solvant,
- l'impact de la dilution, et
- l'impact des ultrasons,
Le tout réalisé à une température de 60°C

Les résultats sont montrés en figure 6.

Les résultats montrés en figure 6 permettent de démontrer le comportement hydrotropique de cette variante du solvant « NADES Inv. » selon l'invention précédemment testé (variante dénommée « NADES Inv.' »), et ce quel que soit le traitement (sans ou avec ultrasons). Deux phases peuvent être distinguées :
(i) une phase de solubilisation (0 < « NADES Inv.' »% < 70%), et
(ii) une phase d'agrégation (« NADES Inv.' » ≥ 70%).

La meilleure solubilité a été obtenue à 100% « NADES Inv.' », pour les deux traitements (16,46 mmole éq rutine/kg et 30,69 mmole éq rutine/kg sans et avec ultrasons, respectivement). L'impact des ultrasons est plus visible pendant la phase d'agrégation. Pour 100% « NADES Inv.' », l'apport positif des ultrasons est remarquable, puisqu'il est de + 86.45%.

Ces résultats expérimentaux indiquent que le jus d'orange concentré représente un bon candidat pour formuler un solvant selon l'invention (possiblement en raison de sa richesse en acide citrique) et confirment l'intérêt représenté par un procédé d'extraction (en particulier solide-liquide) mettant en œuvre le solvant selon l'invention et assisté par ultrasons.

### Exemple 6 : Extraction de la rutine à partir des fleurs de Sophora japonica L.

Le présent exemple vise à évaluer le pouvoir d'un solvant selon l'invention quant à l'extraction de la rutine à partir de fleurs de *Sophora japonica L.* Deux procédés d'extraction ont été effectués (cf. « Matériels et méthodes » supra, section C), à savoir :
(i) Extraction Assistée par Ultrasons, et
(ii) le traitement par macération (traitement conventionnel).

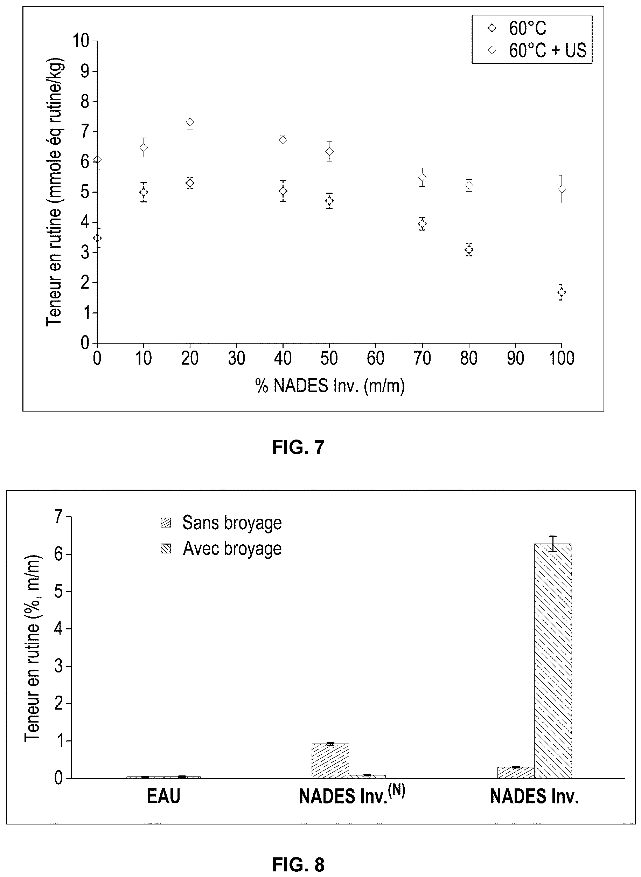

Le solvant selon un mode de réalisation de l'invention « NADES Inv. », constitué d'un mélange de miel de fleurs et de jus de pomme concentré, a été utilisé comme solvant d'extraction. Différentes dilutions ont été préparées à partir de ce « NADES Inv. » afin d'évaluer l'effet de l'ajout de l'eau sur les performances d'extraction de la rutine. Les quantités de rutine dans les extraits liquides obtenus ont été déterminées par dosage spectroscopique en se basant sur les courbes de calibration de cette molécule. Les résultats sont présentés en figure 7.

Comme montré en figure 7, le solvant selon l'invention présente un pouvoir d'extraction de la rutine à partir des fleurs de *Sophora japonica L. (Styphnolobium japonicum),* et plus précisément à partir des boutons floraux, très satisfaisant. En outre, une fois encore, l'application des ultrasons assure une meilleure extraction de la rutine par rapport au procédé conventionnel effectué à la même température (60°C). Pour les deux procédés d'extraction (i) et (ii) supra, un optimum d'extraction à 20% a été obtenu pour le solvant selon l'invention « NADES Inv. » avec un gain de performances d'environ +38% lié à l'application des ultrasons.

### Exemple 7 : Evaluation de l'impact du broyage des fleurs (boutons floraux) de Sophora japonica L. (Styphnolobium japonicum) sur le pouvoir d'extraction de la rutine au moyen de deux solvants eutectiques selon l'invention

Aux fins du présent exemple, deux solvants eutectiques selon l'invention ont été préparés à partir d'un mélange de miel de fleurs et de jus de pomme concentré. Le premier solvant selon l'invention est le solvant dénommé « NADES Inv. », précédemment testé. Le second représente une version diluée du « NADES Inv. » constituée de 20% (m/m) de « NADES Inv. » (miel de fleurs + jus de pomme concentré) et de 80% d'eau ajoutée (à savoir eau distillée, également dénommée « eau exogène »). Le fait d'ajouter 80% d'eau au solvant « NADES Inv. » entraîne une forte dilution réduisant son degré Brix de 70,6° à 12-13°. La solution obtenue correspond parfaitement aux caractéristiques d'un jus « naturel » non concentré. Ce solvant est, par conséquent, désigné comme « NADES Inv. » naturel ou encore « NADES Inv.^{(N)} ».

La figure 8 présente les teneurs en rutine obtenues par extraction avec l'eau, le « NADES Inv. » (cf. définition supra) et le « NADES Inv.^{(N)} » (cf. définition supra) à partir des fleurs (boutons floraux) de *Sophora japonica L. (Styphnolobium japonicum)* non-broyées et broyés. Ces teneurs ont été déterminées par un dosage UHPLC.

D'après le diagramme bâton présenté en figure 8, il apparaît que l'eau ne permet d'extraire qu'une très faible quantité de rutine (0,048 % dans le cas des fleurs non-broyées et 0,051 % dans le cas des fleurs broyées), et ce en l'absence ou en présence d'une étape de prétraitement (à savoir traitement précédant l'étape d'extraction à proprement parler) consistant à broyer les fleurs (boutons floraux) de *Sophora japonica L* (*Styphnolobium japonicum*).

Par conséquent, le broyage ne permet pas d'améliorer le pouvoir d'extraction de la rutine par l'eau, dans la mesure où ce flavonoïde est très faiblement hydrosoluble. Cette solubilisation très limitée dans l'eau ne peut pas être améliorée par une étape de réduction de taille du matériel végétal (broyage des fleurs (boutons floraux)).

Cependant, dans le cas des solvants selon l'invention, à savoir « NADES Inv. » et « NADES Inv.^{(N)} », les résultats sont très différents en fonction de la présence ou de l'absence d'une étape de prétraitement consistant en un broyage des fleurs (boutons floraux) de *Sophora japonica L (Styphnolobium japonicum).*

Sans broyage, le « NADES Inv.^{(N)} » est le solvant le plus adapté pour extraire la rutine. Il permet d'obtenir une teneur dix-neuf fois plus importante que celle obtenue avec l'eau et trois fois plus importante que celle obtenue dans le cas du « NADES Inv. ». Il est toutefois important de noter que, même s'il a un pouvoir d'extraction inférieur à celui du «NADES Inv.^{(N)}», le « NADES Inv. » demeure nettement plus avantageux que l'eau. En effet, son pouvoir d'extraction est six fois plus important que celui de l'eau.

En revanche, sur la matière végétale préalablement broyée, le « NADES Inv. » devient sans conteste le solvant possédant le plus fort pouvoir d'extraction ; celui-ci étant multiplié par vingt-et-un.

### Exemple 8 : Extraction des acides rosmarinique et carnosique à partir des feuilles de romarin (Rosmarinus officinalis L.) broyées

Dans un premier temps, l'effet du choix du solvant a été évalué dans le cas de l'extraction de l'acide rosmarinique (AR) à partir des feuilles de romarin préalablement broyées.

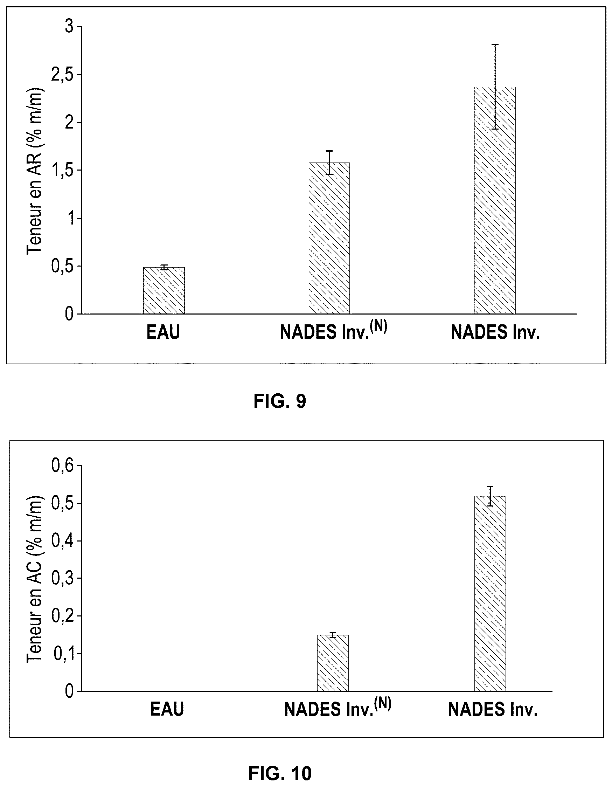

Comme le montre la figure 9, les deux solvants selon l'invention « NADES Inv. » et «NADES Inv.^{(N)}» (cf. définitions supra) ont un pouvoir d'extraction de l'acide rosmarinique significativement supérieur à celui de l'eau. Dans le détail, le solvant « NADES Inv. » apparaît comme le plus adapté pour extraire ce composé dans les présentes conditions expérimentales, avec une teneur de 2,37% d'acide rosmarinique, qui est 1,5 fois plus importante que celle obtenue avec le solvant selon l'invention « NADES Inv.^{(N)} » et 4,8 fois plus importante que celle obtenue en utilisant l'eau comme solvant (cf. figure 9).

Dans un second temps, le pouvoir d'extraction des différents solvants a été évalué dans le cadre de l'extraction de l'acide carnosique (AC), qui est une molécule non soluble dans l'eau et souvent extraite au moyen de mélanges hydro-alcooliques (eau : éthanol). Alors que l'eau est incapable d'extraire l'acide carnosique des feuilles de romarin broyées, les deux solvants selon l'invention « NADES Inv. » et « NADES Inv.^{(N)}» donnent des résultats satisfaisants, avec un effet d'extraction optimal obtenu pour le solvant « NADES Inv. ». Toutefois, même si la teneur en acide carnosique extraite en utilisant le solvant selon l'invention «NADES Inv.^{(N)}» peut paraître, de prime abord, relativement faible (de l'ordre de 0,15 % (cf. figure 10)), elle représente toutefois un résultat expérimental de première importance démontrant l'efficacité du solvant « NADES Inv.^{(N)}» selon l'invention, lequel permet d'élargir le spectre de polarité de l'eau dans le cadre des procédés d'extraction d'une façon considérable. Quant au solvant « NADES Inv. » selon l'invention, il permet d'extraire environ 0,52% d'acide rosmarinique ce qui représente 3,5 fois la teneur obtenue en utilisant le « NADES Inv.^{(N)} ».

En conclusion, il apparaît clairement, à l'aune des informations présentées en figures 9 et 10, que les deux solvants selon l'invention démontrent une efficacité significativement supérieur à celle de l'eau en termes d'extraction de l'acide rosmarinique et de l'acide carnosique à partir de feuilles de romarin broyées, avec un effet optimal en termes de pouvoir d'extraction obtenu en mettant en œuvre le solvant « NADES Inv. » selon l'invention.

### Exemple 9 : Extraction de l'acide chlorogénique et du cynaroside à partir des feuilles d'artichaut (Cynara scolymus L.)

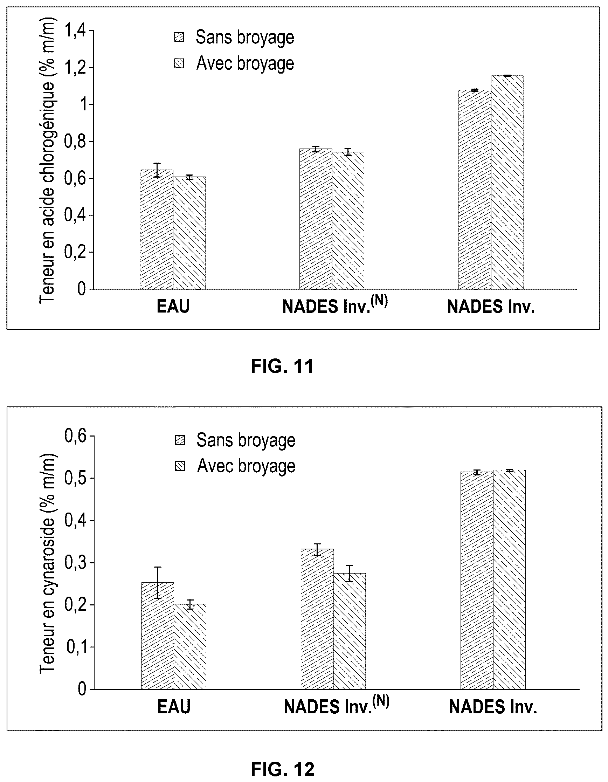

Les performances d'extraction des solvants selon l'invention « NADES Inv. » et «NADES Inv. ^{(N)}» (cf. définitions supra), ainsi que de l'eau, ont été évaluées par rapport au pouvoir d'extraction de l'acide chlorogénique et du cynaroside à partir de feuilles d'artichaut broyées ou non broyées. Les résultats obtenus avec les différents solvants et l'impact du prétraitement par broyage de la matière végétale sont montrés en figure 11 et en figure 12 et sont discutés ci-après.

Comme montré en figure 11, les solvants selon l'invention « NADES Inv. » et « NADES Inv. ^{(N)} » ont un pouvoir d'extraction supérieur à l'eau en ce qui concerne l'extraction de l'acide chlorogénique à partir de feuilles d'artichaut broyées ou non. Le solvant selon l'invention « NADES Inv. » apparaît être le solvant ayant le pouvoir d'extraction de l'acide chlorogénique le plus important, et ce à partir de feuilles d'artichaut broyées et non broyées.

Il convient de noter, que concernant le présent exemple, le broyage n'apparaît pas avoir d'effet significatif, quel que soit le solvant d'extraction utilisé.

De manière similaire, et comme montré en figure 12, les solvants selon l'invention « NADES Inv. » et « NADES Inv.^{(N)}» ont un pouvoir d'extraction du cynaroside à partir de feuilles d'artichaut broyées ou non supérieur à celui de l'eau. Là encore :
- le solvant selon l'invention « NADES Inv. » a montré un fort potentiel d'extraction du cynaroside à partir de feuilles d'artichaut broyées ou non, et
- le broyage n'apparaît également pas avoir d'effet significatif, et ce quel que soit le solvant d'extraction utilisé.

### Références bibliographiques

**[1]** : TANG et al. « Application of ionic liquid for extraction and separation of bioactive compounds from plants ». Elsiever, Journal of Chromatography B, (2012). 904 (2012) 1- 21
**[2]** : PAIVA et al. « Natural Deep Eutectic Solvents - Solvents for the 21st Century». ACS Publication, (2014). ACS Sustainable Chem. Eng. 2014, 2, 1063-1071
**[3]** : MBOUS et al. « Applications of deep eutectic solvents in biotechnology and Bioengineering - Promises and challenges». Elsevier, Biotechnology Advances, (2017). 35 (105-134)
**[4]** : SHISHOV et al. «Application of deep eutectic solvents in analytical chemistry. A review». Elsevier, Microchemical Journal, (2017). 135 (33-38).
**[5]** : SMITH et al. «Deep Eutectic Solvents (DESs) and Their Applications». Chem. Rev, (2014). 114, 11060-11082
**[6] :** NAM et al. Green Chem., (2015).17, 1718-1727
**[7]** : ZI et al. «Solubilities of rutin in eight solvents at T = 283.15, 298.15, 313.15, 323.15, and 333.15K». Elsevier, Science Direct, (2007*).* Fluid Phase Equilibria 261 (2007) 111-114
**[8]** : SUSLICK K.S., « Ultrasound : chemical and physical and biological effects ». Wiley-VCH, London, (1988).
**[9]** : CHEMAT et al, « Ultrasound assisted extraction of food and natural products. Mechanisms, techniques, combinations, protocols and applications », Ultrasonics Sonochemistry (2017), 34, 540-560.
**[10]** : ESPINO et al. «Natural designer solvents for greening analytical chemistry». Elsevier, Trends in Analytical Chemistry (2016). 76 (126-136)
**[11]** : Vidal, 2020 https://eurekasante.vidal.fr/parapharmacie/complements-alimentaires/flavonoides-polyphenols.html]

## Revendications

1. Solvant eutectique d'origine naturelle, tel qu'un solvant eutectique profond d'origine naturelle, ledit solvant comprenant :
a) une pluralité de glucides d'origine naturelle différents, ladite pluralité a) comprenant du glucose et du fructose, et
b) une pluralité d'acides organiques d'origine naturelle différents, ladite pluralité b) comprenant l'acide malique et l'acide citrique ;
ledit solvant ayant un degré Brix d'au moins 8, de préférence d'au moins 9 et avantageusement d'au moins 10, à 20°C.

2. Solvant eutectique d'origine naturelle selon la revendication 1, dans lequel ladite pluralité d'acides organiques d'origine naturelle différents représente au moins 0,1%, de préférence au moins 0,15%, de la masse totale dudit solvant.

3. Solvant eutectique d'origine naturelle selon la revendication 1 ou 2, ledit solvant comprenant un mélange d'au moins un premier et d'au moins un deuxième ingrédients d'origine naturelle, ledit au moins un premier ingrédient d'origine naturelle comprenant ladite pluralité de glucides d'origine naturelle différents, et ledit au moins un deuxième ingrédient d'origine naturelle comprenant ladite pluralité d'acides organiques d'origine naturelle différents.

4. Solvant eutectique d'origine naturelle selon la revendication 3, dans lequel :
- ledit au moins un premier ingrédient d'origine naturelle est un composé sucré d'origine naturelle, de préférence ayant un degré Brix à 20°C compris entre environ 40 et environ 95, de préférence entre environ 60 et environ 90, avantageusement entre environ 75 et environ 85, de manière préférée ledit au moins un premier ingrédient d'origine naturelle étant un miel, par exemple un miel de fleurs, un miel d'oranger ou un miel liquide, ou un mélange de miels, et
- ledit au moins un deuxième ingrédient d'origine naturelle comprend au moins 0,2% en masse, de préférence au moins 0,3% en masse, avantageusement au moins 0,35% en masse, d'acides organiques d'origine naturelle, de manière préférée ledit au moins un deuxième ingrédient d'origine naturelle étant un jus de fruits, par exemple un jus de fruits concentré, ou un mélange de jus de fruits, par exemple un mélange de jus de fruits concentrés.

5. Solvant eutectique d'origine naturelle selon la revendication 3 ou 4, dans lequel le rapport en masse entre ledit au moins un premier ingrédient d'origine naturelle et ledit au moins un deuxième ingrédient d'origine naturelle est compris entre 5/1 et 1/5, de préférence entre 3/1 et 1/3, préférablement entre 2/1 et 1/2, avantageusement entre 3/2 et 2/3 ; de manière particulièrement préférée ledit rapport en masse étant d'environ 1/1.

6. Solvant eutectique d'origine naturelle selon l'une des revendications précédentes, ledit solvant comprenant de l'eau exogène, par exemple de l'eau distillée, dans un pourcentage massique inférieur ou égal à 90%, par exemple inférieur ou égal à 80%, par rapport à la masse totale du solvant.

7. Solvant eutectique d'origine naturelle selon l'une des revendications précédentes, dans lequel :
- ladite pluralité de glucides d'origine naturelle différents comprend en outre du saccharose, et/ou
- ladite pluralité d'acides organiques d'origine naturelle différents comprend en outre l'acide tartrique.

8. Utilisation d'un solvant eutectique d'origine naturelle selon l'une des revendications précédentes pour solubiliser et/ou extraire, de préférence pour solubiliser et extraire, par exemple par extraction solide-liquide telle que l'extraction par macération, un ou plusieurs composé(s) d'un matériel végétal, fongique, animal et/ou microbien, de préférence d'un matériel végétal ou fongique, avantageusement d'un matériel végétal.

9. Utilisation selon la revendication précédente, dans laquelle le solvant eutectique d'origine naturelle est utilisé pour solubiliser et extraire un ou plusieurs composé(s) d'un matériel végétal, fongique, animal et/ou microbien, de préférence d'un matériel végétal ou fongique, avantageusement d'un matériel végétal, et dans laquelle l'extraction est une extraction assistée par ultrasons.

10. Procédé d'extraction d'un ou plusieurs composé(s) d'un matériel végétal, fongique, animal et/ou microbien, de préférence d'un matériel végétal ou fongique, avantageusement d'un matériel végétal, ledit procédé comprenant les étapes suivantes :
a) fourniture d'un matériel végétal, fongique, animal et/ou microbien,
b) mise en contact dudit matériel végétal, fongique, animal et/ou microbien avec au moins un solvant eutectique d'origine naturelle selon l'une des revendications 1 à 7 durant un laps de temps suffisant pour permettre la solubilisation dudit ou desdits composé(s) et obtenir un extrait liquide,
c) séparation, par exemple par pressage, de l'extrait liquide obtenu à l'étape b) et du matériel végétal, fongique, animal et/ou microbien résiduel, et
d) récupération, postérieurement à l'étape c), de l'extrait liquide, éventuellement après une étape c') de purification, par exemple par centrifugation.

11. Procédé selon la revendication précédente, dans lequel au moins l'étape b) est réalisée sous ultrasons.

12. Procédé selon la revendication 10 ou 11, comprenant, avant l'étape b), au moins une étape de réduction de taille dudit matériel végétal, fongique, animal et/ou microbien.

13. Procédé selon l'une des revendications 10 à 12, dans lequel l'étape b) est réalisée à une température comprise entre environ 20°C et environ 80°C, de préférence entre environ 30°C et environ 75°C, préférablement entre environ 40°C et environ 70°C, avantageusement entre environ 55°C et environ 65°C, et de manière préférée à une température d'environ 60°C.

14. Utilisation dudit mélange d'au moins un premier et d'au moins un deuxième ingrédients d'origine naturelle tel que défini dans l'une des revendications 3 à 5, pour la préparation d'un solvant eutectique d'origine naturelle, tel qu'un solvant eutectique profond d'origine naturelle.

## Patentansprüche

1. Ein eutektisches Lösemittel natürlichen Ursprungs, wie ein stark eutektisches Lösungsmittel natürlichen Ursprungs, wobei das Lösungsmittel Folgendes beinhaltet:
a) eine Vielzahl von verschiedenen Kohlenhydraten natürlichen Ursprungs, wobei die Vielzahl a) Glucose und Fructose beinhaltet, und
b) eine Vielzahl von verschiedenen organischen Säuren natürlichen Ursprungs, wobei die Vielzahl b) Äpfelsäure und Zitronensäure beinhaltet;
wobei das Lösungsmittel einen Brixgrad bei 20 °C von mindestens 8, vorzugsweise mindestens 9 und vorteilhafterweise mindestens 10 aufweist.

2. Eutektisches Lösemittel natürlichen Ursprungs gemäß Anspruch 1, wobei die Vielzahl von verschiedenen organischen Säuren natürlichen Ursprungs mindestens 0,1 %, vorzugsweise mindestens 0,15 %, des Gesamtgewichts des Lösungsmittels ausmacht.

3. Eutektisches Lösemittel natürlichen Ursprungs gemäß Anspruch 1 oder 2, wobei das Lösungsmittel eine Mischung aus mindestens einem ersten und mindestens einem zweiten Inhaltsstoff natürlichen Ursprungs beinhaltet, wobei der mindestens eine erste Inhaltsstoff natürlichen Ursprungs die Vielzahl von verschiedenen Kohlenhydraten natürlichen Ursprungs beinhaltet, und der mindestens eine zweite Inhaltsstoff natürlichen Ursprungs die Vielzahl von verschiedenen organischen Säuren natürlichen Ursprungs beinhaltet.

4. Eutektisches Lösemittel natürlichen Ursprungs gemäß Anspruch 3, wobei:
- der mindestens eine erste Inhaltsstoff natürlichen Ursprungs eine Zuckerverbindung natürlichen Ursprungs ist, vorzugsweise mit einem Brixgrad bei 20 °C zwischen etwa 40 und etwa 95, vorzugsweise zwischen etwa 60 und etwa 90, vorteilhafterweise zwischen etwa 75 und etwa 85, wobei auf bevorzugte Weise der mindestens eine erste Inhaltsstoff natürlichen Ursprungs ein Honig ist, zum Beispiel ein Blütenhonig, ein Orangenhonig oder ein flüssiger Honig, oder eine Mischung von Honigsorten,
und
- der mindestens eine zweite Inhaltsstoff natürlichen Ursprungs mindestens 0,2 Gewichts-%, vorzugsweise mindestens 0,3 Gewichts-%, vorteilhafterweise mindestens 0,35 Gewichts-% organische Säuren natürlichen Ursprungs beinhaltet, wobei auf bevorzugte Weise der mindestens eine zweite Inhaltsstoff natürlichen Ursprungs ein Fruchtsaft, zum Beispiel ein Fruchtsaftkonzentrat, oder eine Fruchtsaftmischung, zum Beispiel eine Fruchtsaftkonzentratmischung ist.

5. Eutektisches Lösemittel natürlichen Ursprungs gemäß Anspruch 3 oder 4, wobei das Gewichtsverhältnis zwischen dem mindestens einen ersten Inhaltsstoff natürlichen Ursprungs und dem mindestens einen zweiten Inhaltsstoff natürlichen Ursprungs zwischen 5 : 1 und 1 : 5, vorzugsweise zwischen 3 : 1 und 1 : 3, bevorzugt zwischen 2 : 1 und 1 : 2, vorteilhafterweise zwischen 3 : 2 und 2 : 3 liegt; wobei das Gewichtsverhältnis auf besonders bevorzugte Weise bei etwa 1 : 1 liegt.

6. Eutektisches Lösemittel natürlichen Ursprungs gemäß einem der vorhergehenden Ansprüche, wobei das Lösungsmittel exogenes Wasser, zum Beispiel destilliertes Wasser, in einem Gewichtsprozent von weniger als oder gleich 90 %, zum Beispiel weniger als oder gleich 80 %, bezogen auf das Gesamtgewicht des Lösungsmittels, beinhaltet.

7. Eutektisches Lösemittel natürlichen Ursprungs gemäß einem der vorhergehenden Ansprüche, wobei:
- die Vielzahl von verschiedenen Kohlenhydraten natürlichen Ursprungs ferner Saccharose beinhaltet,
und/oder
- die Vielzahl von verschiedenen organischen Säuren natürlichen Ursprungs ferner Weinsäure beinhaltet.

8. Verwendung eines eutektischen Lösungsmittels natürlichen Ursprungs gemäß einem der vorhergehenden Ansprüche zum Solubilisieren und/oder Extrahieren, vorzugsweise zum Solubilisieren und Extrahieren, zum Beispiel durch Fest-Flüssig-Extraktion wie etwa Mazerationsextraktion, einer oder mehrerer Verbindungen aus einem pflanzlichen, pilzlichen, tierischen und/oder mikrobiellen Material, vorzugsweise aus einem pflanzlichen oder pilzlichen Material, vorteilhafterweise aus einem pflanzlichen Material.

9. Verwendung gemäß dem vorhergehenden Anspruch, wobei das eutektische Lösungsmittel natürlichen Ursprungs verwendet wird, um eine oder mehrere Verbindungen aus einem pflanzlichen, pilzlichen, tierischen und/oder mikrobiellen Material, vorzugsweise aus einem pflanzlichen oder pilzlichen Material, vorteilhafterweise aus einem pflanzlichen Material, zu solubilisieren und zu extrahieren, und wobei die Extraktion eine ultraschallunterstützte Extraktion ist.

10. Ein Verfahren zum Extrahieren einer oder mehrerer Verbindungen aus einem pflanzlichen, pilzlichen, tierischen und/oder mikrobiellen Material, vorzugsweise aus einem pflanzlichen oder pilzlichen Material, vorteilhafterweise aus einem pflanzlichen Material, wobei das Verfahren die folgenden Schritte beinhaltet:
a) Bereitstellen eines pflanzlichen, pilzlichen, tierischen und/oder mikrobiellen Materials,
b) In-Kontakt-Bringen des pflanzlichen, pilzlichen, tierischen und/oder mikrobiellen Materials mit mindestens einem eutektischen Lösungsmittel natürlichen Ursprungs gemäß einem der Ansprüche 1 bis 7 während einer Zeitspanne, die ausreicht, um die Solubilisierung der Verbindungen zu ermöglichen und einen flüssigen Extrakt zu erhalten,
c) Trennen, zum Beispiel durch Pressen, des in Schritt b) erhaltenen flüssigen Extrakts und des restlichen pflanzlichen, pilzlichen, tierischen und/oder mikrobiellen Materials, und
d) Rückgewinnen des flüssigen Extrakts nach Schritt c), optional nach einem Reinigungsschritt c'), zum Beispiel durch Zentrifugieren.

11. Verfahren gemäß dem vorhergehenden Anspruch, wobei mindestens Schritt b) unter Ultraschall durchgeführt wird.

12. Verfahren gemäß Anspruch 10 oder 11, das vor Schritt b) mindestens einen Schritt des Verkleinerns des pflanzlichen, pilzlichen, tierischen und/oder mikrobiellen Materials beinhaltet.

13. Verfahren gemäß einem der Ansprüche 10 bis 12, wobei Schritt b) bei einer Temperatur zwischen etwa 20 °C und etwa 80 °C, vorzugsweise zwischen etwa 30 °C und etwa 75 °C, bevorzugt zwischen etwa 40 °C und etwa 70 °C, vorteilhafterweise zwischen etwa 55 °C und etwa 65 °C und auf bevorzugte Weise bei einer Temperatur von etwa 60 °C durchgeführt wird.

14. Verwendung der Mischung aus mindestens einem ersten und mindestens einem zweiten Inhaltsstoff natürlichen Ursprungs, wie in einem der Ansprüche 3 bis 5 definiert, zum Herstellen eines eutektischen Lösungsmittels natürlichen Ursprungs, wie etwa eines stark eutektischen Lösungsmittels natürlichen Ursprungs.

## Claims

1. A eutectic solvent of natural origin, such as a deep eutectic solvent of natural origin, said solvent comprising:
a) a plurality of different carbohydrates of natural origin, said plurality a) comprising glucose and fructose, and
b) a plurality of different organic acids of natural origin, said plurality b) comprising malic acid and citric acid;
said solvent having a Brix degree of at least 8, preferably of at least 9 and advantageously of at least 10, at 20°C.

2. The eutectic solvent of natural origin according to claim 1, wherein said plurality of different organic acids of natural origin represents at least 0.1%, preferably at least 0.15%, of the total weight of said solvent.

3. The eutectic solvent of natural origin according to claim 1 or 2, said solvent comprising a mixture of at least one first and at least one second ingredient of natural origin, said at least first ingredient of natural origin comprising said plurality of different carbohydrates of natural origin, and said at least one second ingredient of natural origin comprising said plurality of different organic acids of natural origin.

4. The eutectic solvent of natural origin according to claim 3, wherein:
- said at least one first ingredient of natural origin is a sugar compound of natural origin, preferably having a Brix degree at 20°C of between about 40 and about 95, preferably between about 60 and about 90, advantageously between about 75 and about 85, said at least one first ingredient of natural origin preferably being a honey, for example a flower honey, an orange blossom honey or a liquid honey, or a mixture of honeys,
and
- said at least one second ingredient of natural origin comprises at least 0.2% by weight, preferably at least 0.3% by weight, advantageously at least 0.35% by weight, of organic acids of natural origin, said at least one second ingredient of natural origin preferably being a fruit juice, for example a concentrated fruit juice, or a mixture of fruit juices, for example a mixture of concentrated fruit juices.

5. The eutectic solvent of natural origin according to claim 3 or 4, wherein the weight ratio between said at least one first ingredient of natural origin and said at least one second ingredient of natural origin is between 5:1 and 1:5, preferably between 3:1 and 1:3, preferably between 2:1 and 1:2, advantageously between 3:2 and 2:3; said weight ratio particularly preferably being about 1:1.

6. The eutectic solvent of natural origin according to one of the preceding claims, said solvent comprising exogenous water, for example distilled water, in a weight percentage less than or equal to 90%, for example less than or equal to 80%, relative to the total weight of the solvent.

7. The eutectic solvent of natural origin according to one of the preceding claims, wherein:
- said plurality of different carbohydrates of natural origin further comprises sucrose,
and/or
- said plurality of different organic acids of natural origin further comprises tartaric acid.

8. Use of a eutectic solvent of natural origin according to one of the preceding claims for solubilizing and/or extracting, preferably for solubilizing and extracting, for example by solid-liquid extraction such as extraction by maceration, one or more compound(s) from a plant, fungal, animal and/or microbial material, preferably from a plant or fungal material, advantageously from a plant material.

9. The use according to the preceding claim, wherein the eutectic solvent of natural origin is used to solubilize and extract one or more compound(s) from a plant, fungal, animal and/or microbial material, preferably from a plant or fungal material, advantageously from a plant material, and wherein the extraction is an ultrasound-assisted extraction.

10. A method of extracting one or more compound(s) from a plant, fungal, animal and/or microbial material, preferably from a plant or fungal material, advantageously from a plant material, said method comprising the following steps:
a) providing a plant, fungal, animal and/or microbial material,
b) contacting said plant, fungal, animal and/or microbial material with at least one eutectic solvent of natural origin according to one of claims 1 to 7 for a period of time sufficient to enable solubilisation of said compound(s) and obtain a liquid extract,
c) separating, for example by pressing, the liquid extract obtained in step b) and the residual plant, fungal, animal and/or microbial material, and
d) recovering, subsequently to step c), the liquid extract, optionally after a purification step c'), for example by centrifugation.

11. The method according to the preceding claim, wherein at least step b) is performed under ultrasound.

12. The method according to claim 10 or 11, comprising, before step b), at least one step of reducing the size of said plant, fungal, animal and/or microbial material.

13. The method according to one of claims 10 to 12, wherein step b) is performed at a temperature of between about 20°C and about 80°C, preferably between about 30°C and about 75°C, preferably between about 40°C and about 70°C, advantageously between about 55°C and about 65°C, and preferably at a temperature of about 60°C.

14. Use of said mixture of at least one first and at least one second ingredient of natural origin as defined in one of claims 3 to 5, for preparing a eutectic solvent of natural origin, such as a deep eutectic solvent of natural origin.
